# EUROPÄISCHE PATENTSCHRIFT

(11) **EP 4 363 181 B1**
(45) Veröffentlichungstag und Bekanntmachung des Hinweises auf die Patenterteilung: **18.09.2024**
(21) Anmeldenummer: 22757976.0
(22) Anmeldetag: 11.08.2022
(51) Int. Cl.: B29C 33/02, B29C 33/12, B29C 33/42, B29C 70/08, B29C 70/20, B29C 70/68, B29C 70/86, H01M 50/229, H01M 50/236, H01M 50/242, H01M 50/249, B29C 70/18

(54) **BATTERIESCHALE AUS KUNSTSTOFF AUFWEISEND EINE FORMMASSE UND EINEN ENDLOSFASERVERSTÄRKTEN EINLEGER, VERFAHREN ZUM HERSTELLEN EINER BATTERIESCHALE, TRAKTIONSBATTERIE UND KRAFTFAHRZEUG**
BATTERY TRAY MADE OF PLASTICS MATERIAL, COMPRISING A MOULDING COMPOUND AND A CONTINUOUS-FIBRE-REINFORCED INSERT, METHOD FOR PRODUCING A BATTERY TRAY, TRACTION BATTERY, AND MOTOR VEHICLE
BAC À BATTERIE EN MATIÈRE PLASTIQUE PRÉSENTANT UNE MATIÈRE À MOULER ET UN INSERT RENFORCÉ PAR DES FIBRES CONTINUES, PROCÉDÉ DE FABRICATION D'UN BAC À BATTERIE, BATTERIE DE TRACTION ET VÉHICULE AUTOMOBILE

(30) Priorität: 27.09.2021 DE 102021210758
(43) Veröffentlichungstag der Anmeldung: 08.05.2024
(73) Patentinhaber: Kautex Textron GmbH & Co. KG, 53229 Bonn (DE)
(72) Erfinder: BERGMANN, Nicolay, 52066 Aachen (DE); HEIDEMEYER, Timm, 50679 Köln (DE); ENKIRCH, Georg, 56414 Salz (DE); TISCHER, Felix, 56598 Hammerstein (DE); SIGGIA, Fabian, 51143 Köln (DE); BOUFFIER, Roman, 53639 Königswinter (DE)
(74) Vertreter: Richly & Ritschel Patentanwälte PartG mbB
(86) Internationale Anmeldenummer: PCT/EP2022/072608
(87) Internationale Veröffentlichungsnummer: WO 2023/046362

(56) Entgegenhaltungen:
- EP-A1- 3 584 055
- DE-A1- 102011 052 513

## Beschreibung

Diese Patentanmeldung beansprucht die Priorität der deutschen Patentanmeldung 10 2021 210 758.3.

Die Erfindung betrifft eine Batterieschale aus Kunststoff aufweisend eine Formmasse und einen endlosfaserverstärkten Einleger sowie ein Verfahren zum Herstellen einer Batterieschale, eine Traktionsbatterie und ein Kraftfahrzeug.

Insbesondere betrifft die Erfindung eine Batterieschale, insbesondere eine Batterieschale einer Traktionsbatterie, wobei die Batterieschale aus einer Formmasse und einem endlosfaserverstärkten Einleger ausgeformt ist, wobei der endlosfaserverstärkte Einleger eine erste Fläche aufweist, welche zu mehr oder gleich 50 % nicht von der Formmasse überpresst ist, bevorzugt zu mehr oder gleich 60 % und besonders bevorzugt zu mehr oder gleich 75 %.

Aktuelle Bestrebungen in der Automobilindustrie für eine wirtschaftliche Serienfertigung von kunststoffbasierten Leichtbaukomponenten forcieren ressourcenoptimierte Verfahren durch Senkung des Faser- und Halbzeugeinsatzes sowie die Nutzung materialspezifischer Performance- und Kostenvorteile durch Multimaterialbauweisen. Zudem wird eine Kostenreduzierung durch Bauteilfunktionalisierung bei gleichzeitiger Fertigungsintegration und Reduzierung von Prozessschritten angestrebt.

Für die Fertigung von großflächigen und verrippten Bauteilen nimmt das Fließpressen von langfaserverstärkten Thermoplasten einen hohen Stellenwert ein. Für den Einsatz von Anwendungen im strukturellen Leichtbau, insbesondere für Batterieschalen, und den damit einhergehenden höheren Anforderungen hinsichtlich Bauteilsteifigkeit und -festigkeit müssen Bauteile aus langfaserverstärkten Thermoplasten in nachträglichen Prozessschritten mit weiteren Strukturen gefügt werden.

EP3584055A1 offenbart den Oberbegriff des Anspruchs 1.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe eine Batterieschale nach Anspruch 1.

Begrifflich sei hierzu Folgendes erläutert:
Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Im Rahmen der hier vorliegenden Patentanmeldung sei der Ausdruck "insbesondere" immer so zu verstehen, dass mit diesem Ausdruck ein optionales, bevorzugtes Merkmal eingeleitet wird. Der Ausdruck ist nicht als "und zwar" und nicht als "nämlich" zu verstehen.

Unter einer "Batterieschale" wird ein Gehäusebestandteil einer Batterie, insbesondere einer Traktionsbatterie, verstanden.

Insbesondere ist eine Batterieschale zur Aufnahme von Komponenten einer Batterie eingerichtet und weist dementsprechend einen Aufnahmeraum zur Aufnahme von Komponenten auf, sodass diese durch die Batterieschale vor äußeren Einflüssen geschützt und/oder zumindest mittelbar in der Batterieschale befestigt werden können.

Vorzugsweise wird unter einer Batterieschale eine Batterieunterschale oder eine Batterieoberschale verstanden, wobei Batterieunterschale und Batterieoberschale vorzugsweise gemeinsam die wesentlichen Komponenten des Gehäuses einer Traktionsbatterie ergeben.

Insbesondere weist eine Batterieschale einen "Boden" und im vorzugsweisen Fall einer Traktionsbatterie mit einem im Wesentlichen rechteckigen Grundriss zumindest vier "Seitenwände" auf.

Boden und Seitenwände der Batterieschale formen das Aufnahmevolumen einer Batterieschale aus, wobei das Aufnahmevolumen der Batterieschale die "Innenseite" der Batterieschale beschreibt. Ausgehend von dem Aufnahmevolumen der Batterieschale befindet sich die "Außenseite" der Batterieschale auf der von dem Aufnahmevolumen abgewendeten Seite des Bodens sowie der Seitenwände.

Bei einer "Formmasse" sei an einen Kunststoff gedacht, insbesondere einen thermoplastischen oder einen duroplastischen Kunststoff, welcher mit einem Fasermaterial, insbesondere Glasfaser, Kohlenstofffaser, Aramidfaser oder dergleichen, versetzt ist.

Vorzugsweise weist die Formmasse, insbesondere wenn die Formmasse ein Polyamid ist, Fasern mit einer Länge von kürzer oder gleich 15 mm auf, bevorzugt Fasern mit einer Länge von kürzer oder gleich 12 mm und besonders bevorzugt Fasern mit einer Länge von kürzer oder gleich 10 mm.

Zweckmäßig weist die Formmasse, insbesondere wenn die Formmasse ein Polypropylen ist, Fasern mit einer Länge von kürzer oder gleich 35 mm auf, bevorzugt Fasern mit einer Länge von kürzer oder gleich 30 mm und besonders bevorzugt Fasern mit einer Länge von kürzer oder gleich 25 mm.

Vorzugsweise weist die Formmasse, insbesondere wenn die Formmasse ein duroplastisches SMC (sheet moulding compound) ist, Fasern mit einer Länge von kürzer oder gleich 65 mm auf, bevorzugt Fasern mit einer Länge von kürzer oder gleich 57 mm und besonders bevorzugt Fasern mit einer Länge von kürzer oder gleich 50 mm. Weiterhin vorzugsweise weist die Formmasse, insbesondere wenn die Formmasse ein duroplastisches SMC ist, Fasern mit einer Länge von länger oder gleich 8 mm auf, bevorzugt Fasern mit einer Länge von länger oder gleich 10 mm und besonders bevorzugt Fasern mit einer Länge von länger oder gleich 12 mm.

Vorzugsweise weist die Formmasse ein Polyamid auf, insbesondere ein Polyamid 6, ein Polyamid 6.6 oder ein Polyamid 12. Weiterhin vorzugsweise kann die Formmasse Polypropylen oder Polycarbonat aufweisen.

Unter einem "Einleger" wird eine Komponente verstanden, welche zur lokalen Versteifung der Batterieschale bereits beim Urformen in die Batterieschale eingebracht werden kann. Mit anderen Worten ist ein Einleger eine Versteifung, welche mitsamt der Formmasse zu einer Batterieschale aus Kunststoff ausgeformt wird und welcher, insbesondere durch seine Stoffeigenschaften und/oder seine geometrische Ausrichtung und/oder seine Anordnung in oder an der Formmasse, zur zumindest lokalen Versteifung der Batterieschale eingerichtet ist.

Vorzugsweise weist ein Einleger eine höhere Zugfestigkeit auf, als eine konsolidierte Formmasse.

Vorzugsweise ist ein Einlegeteil ein Halbzeug, insbesondere ein Halbzeug, welches sich zumindest bereichsweise mit einem gleichbleibenden Querschnitt in Haupterstreckungsrichtung des Einlegeteils erstreckt.

Unter einem "endlosfaserverstärkter Einleger" wird ein Einleger verstanden, welcher Endlosfasern aufweist, vorzugsweise ein Einleger aufweisend Endlosfasern und ein Matrixmaterial aus einem thermoplastischen Kunststoff. Ein Matrixmaterial aus thermoplastischem Kunststoff kann eine Umformbarkeit des endlosfaserverstärkten Einlegers und/oder eine stoffschlüssige Verbindung von dem endlosfaserverstärkten Einleger und der Formmasse ermöglichen.

Unter einer Fläche eines endlosfaserverstärkten Einlegers wird eine Fläche verstanden, welche den endlosfaserverstärkten Einleger begrenzt und welche durch die Kanten des Einlegers begrenzt ist. Vorzugsweise wird unter der ersten Fläche eines Einlegers eine der beiden zumindest annähernd gleich großen und sich nicht entlang der Dicke des endlosfaserverstärkten Bauteils erstreckenden Oberflächen des endlosfaserverstärkten Einlegers verstanden.

Unter von der Formmasse "überpresst" wird verstanden, dass der endlosfaserverstärkte Einleger auf der betreffenden Fläche oder Teilfläche eine Formmasse aufweist, welche vorzugsweise während dem designierten Ausformen der Batterieschale zumindest bereichsweise über die betreffende Fläche geflossen ist. Da das Fließen der Formmasse eine treibende Kraft benötigt, wird auch von überpressen gesprochen. Der treibenden Kraft der Formmasse steht stets auch eine Gegenkraft gegenüber. Diese wird unter anderem auch zumindest in den Bereichen in denen ein endlosfaserverstärkter Einleger an die Formmasse angrenzt durch den endlosfaserverstärkten Einleger auf die Formmasse übertragen. Durch den wirkenden Schmelzedruck der Formmasse kann erreicht werden, dass der endlosfaserverstärkte Einleger zumindest teilflächig eine Fließfront der Formmasse beschreibt und von der Formmasse bis zum lokalen Erreichen einer Artikelkavität des zur Ausformung verwendeten Werkzeugs von der Formmasse an die Artikelkavität angelegt und im nachfolgenden angedrückt wird. Hierdurch kann vorteilhaft erreicht werden, dass ein endlosfaserverstärkter Einleger durch das Überpressen mit Formmasse an einer gewünschten Position in der Batterieschale angeordnet wird, insbesondere an einer Randschicht der Batterieschale angeordnet wird, vorzugsweise reproduzierbar angeordnet wird.

Vorzugsweise wird von einer mit Formmasse überpressten Fläche oder Teilfläche des endlosfaserverstärkten Einlegers gesprochen, wenn die betreffende Fläche oder Teilfläche eine unmittelbar mit ihr verbundene Formmasse mit einer Dicke von größer oder gleich 1 mm aufweist, bevorzugt mit einer Dicke von größer oder gleich 0,5 mm und besonders bevorzugt mit einer Dicke von größer oder gleich 0,2 mm. Hierdurch kann unter anderem erreicht werden, dass der entsprechende Bereich mediendicht ausgestaltet ist und gleichzeitig mit einem minimalen Massenanteil von Formmasse auskommt.

Im Stand der Technik ist bekannt, dass Batterieschalen aus langfaserverstärkten Thermoplasten wegen den hohen Anforderungen hinsichtlich Bauteilsteifigkeit und -festigkeit in nachträglichen Prozessschritten mit weiteren Strukturen gefügt werden, um die geforderten Eigenschaften zu erreichen.

Abweichend wird hier eine Batterieschale vorgeschlagen, die direkt beim Urformen der Batterieschale mit einem endlosfaserverstärkten Einleger versteift worden ist. Hierzu wurde der endlosfaserverstärkte Einleger integral mit der Formmasse zu der hier vorgeschlagenen Batterieschale urgeformt.

Dabei sei unter anderem daran gedacht, dass der endlosfaserverstärkte Einleger ein thermoplastisches Matrixmaterial aufweist, sodass der endlosfaserverstärkte Einleger unter anderem unter Einwirkung der Schmelzetemperatur und des Schmelzedrucks der Formmasse ausformbar ist.

Der endlosfaserverstärkte Einleger ist zur Versteifung der Batterieschale eingerichtet. Die Versteifung basiert unter anderem auf den Stoffeigenschaften des endlosfaserverstärkten Einlegers und/oder der Ausrichtung des endlosfaserverstärkten Einlegers, insbesondere der konturgetreuen Ausrichtung des endlosfaserverstärkten Einlegers mit sofern überhaupt lediglich einem Mindestmaß an Falten und/oder Beulen, und/oder der Wechselwirkung des endlosfaserverstärkten Einlegers mit der Batterieschale.

Vorzugsweise ist der endlosfaserverstärkte Einleger in einem ersten Teilbereich vollständig von der Formmasse umgeben und in einem zweiten Teilbereich angrenzend an die Formmasse angeordnet. Hierdurch kann in dem ersten Teilbereich ein Formschluss zwischen der Formmasse und dem endlosfaserverstärkten Einleger erreicht werden.

Vorzugsweise sind das Kunststoffmaterial der Formmasse und das Kunststoffmaterial des endlosfaserverstärkten Einlegers stofflich derart kompatibel, dass sie eine stoffschlüssige Verbindung miteinander eingehen können, wodurch eine besonders steife Ausgestaltung der Batterieschale und/oder eine besonders hohe Langlebigkeit der Batterieschale erreicht werden können. In diesem Fall kann weiterhin erreicht werden, dass die Batterieschale monolithisch ausgeformt ist.

Gemäß einer bevorzugten Ausführungsform weist der endlosfaserverstärkte Einleger eine erste Fläche auf, welche zu mehr oder gleich 55 % nicht von der Formmasse überpresst ist, bevorzugt zu mehr oder gleich 66 % und besonders bevorzugt zu mehr oder gleich 70 %. Ebenfalls vorteilhaft weist der endlosfaserverstärkte Einleger eine erste Fläche auf, welche zu mehr oder gleich 80 % nicht von der Formmasse überpresst ist, bevorzugt zu mehr oder gleich 85 % und besonders bevorzugt zu mehr oder gleich 90 %. Weiterhin vorteilhaft weist der endlosfaserverstärkte Einleger eine erste Fläche auf, welche zu mehr oder gleich 92,5 % nicht von der Formmasse überpresst ist, bevorzugt zu mehr oder gleich 95 % und besonders bevorzugt zu mehr oder gleich 97,5 %.

Ausdrücklich sei darauf hingewiesen, dass die vorstehenden Werte für den Anteil der von der Formmasse überpressten ersten und/oder zweiten Fläche des endlosfaserverstärkten Einlegers nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Anteils der von der Formmasse überpressten ersten und/oder zweiten Fläche des endlosfaserverstärkten Einlegers liefern.

Durch den hier vorgeschlagenen Aspekt kann vorteilhaft erreicht werden, dass die mit einem endlosfaserverstärkten Einleger versteifte Batterieschale besonders effizient und reproduzierbar hergestellt werden kann, insbesondere ohne einen endlosfaserverstärkten Einleger nach dem Ausformen der Formmasse in einem separaten Prozessschritt aufbringen zu müssen. Ein weiterer Vorteil der hier vorgeschlagenen Batterieschale ist die hohe Positionsgenauigkeit des endlosfaserverstärkten Einlegers, wodurch die reproduzierbare Herstellung der Batterieschale verbessert werden kann.

Weiterhin besonders vorteilhaft kann erreicht werden, dass der endlosfaserverstärkte Einleger zumindest teilweise direkt an der Oberfläche der Batterieschale angeordnet sein kann, wodurch eine konturgetreue Genauigkeit der Anordnung des endlosfaserverstärkten Einlegers erreicht werden kann. Hierdurch können ungewünschte Beulen und/oder Falten des endlosfaserverstärkten Einlegers in der Batterieschale verhindert werden oder zumindest gegenüber dem Stand der Technik eine kleinere Ausprägung aufweisen.

Insgesamt kann so eine Batterieschale erreicht werden, welche einen lastpfadgerecht und reproduzierbar angeordneten endlosfaserverstärkten Einleger zur Versteifung der Batterieschale aufweist.

Auch wird vorgeschlagen, dass die der ersten Fläche des endlosfaserverstärkten Einlegers gegenüberliegende zweite Fläche überwiegend von Formmasse überpresst ist.

Hierdurch kann unter anderem die reproduzierbare Anordnung des endlosfaserverstärkten Einlegers in der Batterieschale verbessert werden.

Weiterhin kann durch die große Kontaktfläche zwischen der zweiten Fläche des endlosfaserverstärkten Einlegers und der Formmasse eine besonders stabile Kraftübertragung zwischen der Formmasse und dem endlosfaserverstärkten Einleger erreicht werden.

Der hier vorgeschlagene Bereich der zweiten Fläche des endlosfaserverstärkten Einlegers, welcher mit Formmasse überpresst ist, ermöglicht unter anderem die Ausgestaltung komplexerer und/oder dickerer Geometrien der Batterieschale. So wird unter anderem ermöglicht, dass Funktionselemente besser in die Batterieschale integriert werden können.

Weiterhin wird hierdurch ermöglicht, dass ein von einem endlosfaserverstärkten Einleger zumindest teilweise umgebener Bereich eine gewünschte komplexe Geometrie aufnehmen kann, insbesondere eine versteifende Rippenstruktur, insbesondere eine Rippenstruktur eines inneren Versteifungsmittels.

Vorzugsweise kann erreicht werden, insbesondere durch die zumindest zu einem großen Anteil mit Formmasse überpresste zweite Fläche des endlosfaserverstärkten Einlegers, dass die hier vorgeschlagene Batterieschale mediendicht ist. Ein Organosheet ist nicht zwingend mediendicht, jedoch kann durch Hinterpressen eines Organosheets eine Mediendichtigkeit der betreffenden Stelle erreicht werden.

Ausdrücklich sei darauf hingewiesen, dass eine Batterieschale auch eine Mehrzahl von endlosfaserverstärkten Einlegern aufweisen kann, insbesondere zwei endlosfaserverstärkte Einleger, drei endlosfaserverstärkte Einleger, vier endlosfaserverstärkte Einleger, fünf endlosfaserverstärkte Einleger, sechs endlosfaserverstärkte Einleger, sieben endlosfaserverstärkte Einleger, acht endlosfaserverstärkte Einleger, neun endlosfaserverstärkte Einleger und so weiter. Dabei sei unter andren daran gedacht, dass eine Mehrzahl von endlosfaserverstärkten Einlegern angrenzend aneinander angeordnet ist. Alternativ sei daran gedacht, dass endlosfaserverstärkte Einleger in unterschiedlichen Bereichen angeordnet sind.

Weiterhin wird hier unter anderem vorzugsweise vorgeschlagen, dass die Batterieschale Funktionselemente aufweist. Bei Funktionselementen sei unter anderem an Verbindungsmittel gedacht, welche eine Verbindung zwischen der Batterieschale und Komponenten der designierten Traktionsbatterie und/oder dem designierten Kraftfahrzeug eingerichtet sind. Unter anderem sei dabei an ein Verbindungsmittel gedacht, welches einen Hohlraum aufweist, insbesondere ein Innengewinde aufweist, der im Bereich des endlosfaserverstärkten Einlegers ausgeformt ist.

Weiterhin sei bei Funktionselementen unter anderem auch an Fluidleitungen gedacht, die in der Batterieschale ausgeformt sind.

Gemäß einer bevorzugten Ausführungsform weist der endlosfaserverstärkten Einleger ein Organosheet und/oder ein Tape-Gelege auf.

Begrifflich sei hierzu Folgendes erläutert:
Unter einem "Organosheet" wird ein Faserverbundwerkstoff aufweisend Endlosfaser, insbesondere Endlosfasern mit einer Faserlänge von mehr oder gleich 40 mm, und einen thermoplastischen Kunststoff verstanden. Vorzugsweise sind die Endlosfasern unidirektional orientiert. Weiterhin vorzugsweise weist ein Organosheet ein Gewebe oder Gelege aus Endlosfasern auf, welche mit einem thermoplastischen Matrixmaterial benetzt sind.

Unter einem "Tape-Gelege" wird ein Gelege aus unidirektional orientierten Endlosfasern verstanden, welche mit einem thermoplastischen Matrixmaterial benetzt sind.

Hier wird vorgeschlagen, dass ein endlosfaserverstärkter Einleger ein Organosheet und/oder ein Tape-Gelege aufweist oder daraus besteht.

Vorteilhaft kann hierdurch erreicht werden, dass der endlosfaserverstärkte Einleger aus gut verfügbaren Komponenten aufgebaut werden kann, welche zusätzlich effizient verarbeitet werden können.

Gemäß einer besonders zweckmäßigen Ausführungsform ist der endlosfaserverstärkte Einleger aus einer Ebene heraus ausgeformt.

Begrifflich sei hierzu Folgendes erläutert:
Unter einem "aus einer Ebene heraus ausgeformten" endlosfaserverstärkten Einleger wird verstanden, dass dieser eine dreidimensionale sich nicht flach erstreckende Geometrie aufweist. Insbesondere ist ein ursprünglich vor dem Ausformen der Batterieschale eine flache Geometrie aufweisender endlosfaserverstärkter Einleger derart ausgeformt, dass er nach dem Ausformen keine ebene Geometrie mehr aufweist. Mit anderen Worten ragt der endlosfaserverstärkte Einleger aus einer flachen Ebene heraus. Dabei weist der endlosfaserverstärkte Einleger eine von dem designierten Werkzeug zur Herstellung der Batterieschale vorgeschriebene werkzeugabhängige nicht ebene Geometrie auf.

Vorzugsweise wird unter einer flachen Ebene eine flache Geometrie mit einer endlichen Dicke verstanden, vorzugsweise mit einer Dicke von kleiner oder gleich 10 mm, bevorzugt mit einer Dicke von kleiner oder gleich 5 mm und besonderes bevorzugt mit einer Dicke von kleiner oder gleich 2 mm. Demnach kann auch ein endlosfaserverstärkter Einleger in einer Ebene ausgeformt sein, der kleinere Beulen und/oder Falten aufweist, dessen übergeordnete Geometrie sich jedoch in der vorstehenden Dicke einer flachen Geometrie erstreckt.

Vorteilhaft kann durch einen aus einer Ebene heraus ausgeformten endlosfaserverstärkten Einleger die Steifigkeit erhöht werden, insbesondere da der aus einer Ebene ausgeformte endlosfaserverstärkte Einleger zumindest bezogen auf eine Achse ein gegenüber einem ebenen endlosfaserverstärkten Einleger größeres Flächenträgheitsmoment aufwiest.

Optional weist der endlosfaserverstärkte Einleger in einem Querschnitt zu seiner Haupterstreckungsrichtung zumindest einen ersten Schenkel und einen zweiten Schenkel auf, wobei der erste Schenkel und der zweite Schenkel miteinander verbunden sind, wobei der erste Schenkel und der zweite Schenkel einen Winkel von kleiner oder gleich 100° zueinander aufweisen, bevorzugt einen Winkel von kleiner oder gleich 50° und besonders bevorzugt einen Winkel von kleiner oder gleich 30°.

Begrifflich sei hierzu Folgendes erläutert:
Unter der "Haupterstreckungsrichtung" des endlosfaserverstärkten Einlegers wird vorzugsweise die Richtung verstanden in welcher der endlosfaserverstärkte Einleger seinen Querschnitt im Wesentlichen beibehält. Vorzugsweise meint die Haupterstreckungsrichtung die Längserstreckungsrichtung des endlosfaserverstärkten Einlegers.

Unter einem "Schenkel" wird ein Teilbereich eines endlosfaserverstärkten Einlegers verstanden, welcher sich zumindest bereichsweise im Wesentlichen geradlinig erstreckt. Vorzugsweise wird ein Schenkel als ein zumindest an einem Ende angeordneter Teilbereich des endlosfaserverstärkten Einlegers verstanden, wobei sich der Schenkel im Wesentlichen geradlinig erstreckt.

Vorzugsweise sei daran gedacht, dass ein erster Schenkel des endlosfaserverstärkten Einlegers mittelbar über die Formmasse oder unmittelbar mit einem zweiten Schenkel des endlosfaserverstärkten Einlegers verbunden ist.

Vorzugsweise sind der erste und der zweite Schenkel nicht parallel zueinander ausgerichtet, sodass die geradlinige Verlängerung der Schenkel zu einem Scheitelpunkt führt, welchen der endlosfaserverstärkte Einleger jedoch nicht umfassen muss. Dabei sei unter anderem an einen V-förmigen oder einen U-förmigen Querschnitt eines endlosfaserverstärkten Einlegers gedacht, insbesondere können zwei Schenkel durch eine differenzierbare Krümmung oder einen Knick ineinander übergehen. Ein Winkel zwischen den Schenkeln kann über die geradlinige Verlängerung der Schenkel und den gebildeten Scheitelpunkt bestimmt werden.

Durch den Verlauf der Schenkel kann eine geometrische Ausrichtung des endlosfaserverstärkten Einlegers erreicht werden, die eine vorteilhafte Versteifung der Batterieschale bewirkt.

Vorzugsweise weist ein Schenkel eine von dem endlosfaserverstärkten Einleger umfasste Schenkellänge auf, welche mehr oder gleich 1 cm beträgt, bevorzugt mehr oder gleich 2 cm und besonders bevorzugt mehr oder gleich 3 cm. Weiterhin vorzugsweise weist ein Schenkel eine von dem endlosfaserverstärkten Einleger umfasste Schenkellänge auf, welche mehr oder gleich 5 cm beträgt, bevorzugt mehr oder gleich 7 cm und besonders bevorzugt mehr oder gleich 10 cm.

Ein erster Schenkel kann vorzugsweise eine von dem endlosfaserverstärkten Einleger umfasste Schenkellänge aufweisen, welche größer oder gleich der von dem endlosfaserverstärkten Einleger umfassten Schenkellänge des zweiten Schenkels ist.

Ein endlosfaserverstärkter Einleger kann auch mehr als zwei Schenkel aufweisen, insbesondere drei Schenkel, vier Schenkel, fünf Schenkel und so weiter. Auch hier sei daran gedacht, dass diese mittelbar über die Formmasse oder unmittelbar miteinander verbunden sind. Weiterhin bilden benachbarte Schenkel vorzugsweise durch den Schnittpunkt ihrer geradlinigen Verlängerungen einen Scheitelpunkt. Unter anderem sei hier an einen endlosfaserverstärkten Einleger gedacht, welcher sich mittels mehr als zwei Schenkeln ausgehend von dem Boden der Batterieschale in ein inneres Versteifungsmittel erstreckt. Ein endlosfaserverstärkter Einleger mit zumindest vier oder fünf Schenkeln kann dabei eine Omega-förmige Querschnittsform aufweisen, wobei die beidseitig den endlosfaserverstärkten Einleger begrenzenden Schenkel vorzugsweise im Boden der Batterieschale angeordnet sein können.

Auch bei mehr als zwei Schenkeln des endlosfaserverstärkten Einlegers können mittelbar oder unmittelbar benachbarte Schenkel des endlosfaserverstärkten Einlegers mittelbar über die Formmasse oder unmittelbar miteinander verbunden sein.

Vorzugsweise sei unter anderem auch daran gedacht, dass zwei Schenkel parallel zueinander ausgerichtet sind und mittelbar über die Formmasse oder unmittelbar miteinander verbunden sind.

Zweckmäßig weisen der erste Schenkel und der zweite Schenkel einen Winkel von größer oder gleich 5° zueinander auf, bevorzugt einen Winkel von größer oder gleich 10° und besonders bevorzugt einen Winkel von größer oder gleich 15°.

Auf diese Weise kann vorteilhaft eine lokale Versteifung der Batterieschale erreicht werden, welche einen vergleichsweise kleinen Bauraumbedarf benötigt.

Besonders bevorzugt weist der endlosfaserverstärkte Einleger zumindest eine Aussparung auf.

Begrifflich sei hierzu Folgendes erläutert:
Unter einer "Aussparung" wird ein von dem endlosfaserverstärkten Einleger zumindest teilweise umgebender Bereich verstanden, insbesondere ein von dem endlosfaserverstärkten Einleger vollständig umgebender Bereich. Mit anderen Worten meint eine Aussparung einen Durchbruch und/oder eine Öffnung in dem endlosfaserverstärkten Einleger, also einen Bereich der keine Endlosfaser aufweist.

Vorzugsweise ist eine Aussparung durch Ausstanzung des endlosfaserverstärkten Einlegers an der Stelle der Aussparung hergestellt worden.

Vorteilhaft kann durch eine Aussparung erreicht werden, dass ein Funktionselement, insbesondere ein zumindest bereichsweise hohl gestaltetes Funktionselement im Bereich des endlosfaserverstärkten Einlegers angeordnet sein kann, insbesondere ein Funktionselement, dessen hohl gestalteter Bereich sich durch die Ebene des endlosfaserverstärkten Einlegers hindurcherstreckt.

So kann unter anderem auch durch eine Aussparung erreicht werden, dass Formmasse beim designierten Ausformen der Batterieschale durch die Aussparung in dem endlosfaserverstärkten Einleger hindurchfließen kann und so auch Bereiche angrenzend an die erste Fläche des endlosfaserverstärkten Einlegers mit Formmasse ausgeformt werden können. Mit anderen Worten ermöglicht eine Aussparung in dem endlosfaserverstärkten Einleger eine Batterieschale, welche einerseits eine lastpfadgerechte Integration eines endlosfaserverstärkten Einlegers aufweist und gleichzeitig ein Funktionselement aufweisen kann, welches auf der ersten Fläche des endlosfaserverstärkten Einlegers angeordnet ist und/oder dessen hohl ausgestalteter Bereich die Ebene des endlosfaserverstärkten Einlegers durchdringen kann.

Eine Aussparung kann somit auch als Fließhilfe für die Formmasse beim Ausformen der Batterieschale dienen und erlaubt einen zusätzlichen geometrischen Freiheitsgrad bei der Formgebung der Batterieschale, welcher insbesondere für zusätzliche lokale Versteifungen, Funktionselemente und/oder eine Verbesserung des Formschlusses zwischen dem endlosfaserverstärkten Einleger und der Formmasse dienlich sein kann.

Zweckmäßig weist der endlosfaserverstärkte Einleger unmittelbar angrenzend an seine erste Fläche eine Rippe auf.

Begrifflich sei hierzu Folgendes erläutert:
Unter einer "Rippe" wird eine lokale Materialerhebung angrenzend an den endlosfaserverstärkten Einleger verstanden, welche unmittelbar an die erste Fläche des endlosfaserverstärkten Einlegers angrenzt.

Vorzugsweise ist eine Rippe zur lokalen Versteifung eines Bereichs der Batterieschale eingerichtet, der den endlosfaserverstärkten Einleger aufweist, insbesondere eines Bereichs der mit einem Funktionselement wechselwirkt und/oder der mit einem Funktionselement mittelbar oder unmittelbar verbunden ist.

Unter einem Funktionselement wird unter anderem ein Verbindungsmittel verstanden, über welches äußere Lasten in die Batterieschale eingeleitet werden können.

Vorzugsweise weist der Querschnitt der Rippe Formmasse auf oder ist mit der Formmasse gefüllt. Hierdurch kann weiterhin erreicht werden, dass Formmasse während der designierten Herstellung der Batterieschale durch den Querschnitt der Rippe fließen kann, wodurch die erste Fläche des endlosfaserverstärkten Einlegers teilflächig von Formmasse überpresst werden und eine Rippe ausbilden kann. Weiterhin kann die durch den Querschnitt der Rippe bei der designierten Herstellung der Batterieschale designiert strömende Formmasse ein Funktionselement angrenzend an die Rippe ausformen, welches angrenzend an die erste Fläche des endlosfaserverstärkten Einlegers angeordnet ist.

Weiterhin vorteilhaft kann durch eine Rippe ein Formschluss zwischen dem endlosfaserverstärkten Einleger und der Formmasse verbessert werden.

Bevorzugt umfasst der endlosfaserverstärkte Einleger mit seiner zweiten Fläche eine Querrippe zumindest teilweise.

Begrifflich sei hierzu Folgendes erläutert:
Unter einer "Querrippe" wird eine schlanke zumindest teilweise querab zur Haupterstreckungsrichtung des endlosfaserverstärkten Einlegers, insbesondere querab zur Haupterstreckungsrichtung des endlosfaserverstärkten Einlegers, verlaufende rippenförmig ausgebildete Fortsetzung der Formmasse verstanden, welche zumindest teilweise von dem endlosfaserverstärkten Einleger umfasst ist und welche dazu eingerichtet ist, den Bereich in dem der endlosfaserverstärkte Einleger angeordnet ist zusätzlich zu versteifen, insbesondere eine Querkontraktion des Bereichs zu verhindern oder zu vermindern.

Konkret sei dabei auch an eine Mehrzahl von Querrippen gedacht, welche in regelmäßigen oder unregelmäßigen Abständen angeordnet sein können.

Vorzugsweise sind Querrippen paarweise angeordnet, wobei weiterhin vorzugsweise je eine Querrippe auf beiden Seiten des von dem endlosfaserverstärkten Einleger umfassten Bereichs bei gleichem Wert der Längenerstreckung des endlosfaserverstärkten Einlegers ausgebildet ist.

Optional ist der endlosfaserverstärkte Einleger in einem inneren Versteifungsmittel der Batterieschale angeordnet.

Begrifflich sei hierzu Folgendes erläutert:
Unter einem "inneren Versteifungsmittel" wird eine geometrische Ausgestaltung der Batterieschale auf der Innenseite der Batterieschale verstanden, welche dazu eingerichtet ist, die Batterieschale zu versteifen.

Vorzugsweise handelt es sich bei einem inneren Versteifungsmittel um einen Spant. Unter einem Spant wird eine im Innenraum der Batterieschale aufgewiesene Geometrie verstanden, die zur Versteifung der Batterieschale eingerichtet ist.

Vorzugsweise ist ein Spant ein Längsspant, wobei ein Längsspant sich in Längsrichtung der Batterieschale erstreckt und dazu eingerichtet ist zumindest ein Flächenträgheitsmoment, besonders bevorzugt zwei Flächenträgheitsmomente, eines normal zur Längsrichtung verlaufenden Querschnitts der Batterieschale zu erhöhen, sodass die Batterieschale versteift wird.

Vorzugsweise ist ein Spant ein Querspant, wobei ein Querspant sich in Querrichtung der Batterieschale erstreckt und dazu eingerichtet ist zumindest ein Flächenträgheitsmoment, besonders bevorzugt zwei Flächenträgheitsmomente, eines normal zur Querrichtung verlaufenden Querschnitts der Batterieschale zu erhöhen, sodass die Batterieschale versteift wird.

Vorzugsweise ist ein Spant so angeordnet, dass er als räumliche Trennung zwischen zwei designiert benachbarten Batteriezellen und/oder Batteriemodulen eingerichtet ist. Besonders bevorzugt kann ein Batteriemodul an einem inneren Versteifungsmittel befestigt werden, Weiterhin bevorzugt wird ein Batteriemodul von einem inneren Versteifungsmittel getragen.

Vorzugsweise weist ein inneres Versteifungsmittel zumindest einen Längsspant und zumindest einen Querspant auf. Vorzugsweise sind der zumindest eine Längsspant und der zumindest eine Querspant miteinander verbunden.

Weiterhin sei vorzugsweise an ein inneres Versteifungsmittel gedacht, welches einen auf der Innenseite der Batterieschale angeordneten Aufnahmeraum der Batterieschale in einer querverlaufenden und/oder einer längserstreckenden Haupterstreckungsrichtung teilt, insbesondere mittig teilt.

Hierdurch kann erreicht werden, dass der endlosfaserverstärkte Einleger lastpfadgerecht besonders vorteilhaft in die Batterieschale eingebracht werden kann, wobei gleichzeitig auch der zur Verfügung stehende Bauraum, etwa in einem zwischen den designierten Batteriemodulen angeordneten Trennspant, genutzt werden kann.

Ebenfalls zweckmäßig ist ein endlosfaserverstärkter Einleger in einem äußeren Versteifungsmittel der Batterieschale angeordnet.

Begrifflich sei hierzu Folgendes erläutert:
Unter einem "äußeren Versteifungsmittel" wird eine geometrische Ausgestaltung der Batterieschale auf der Außenseite der Batterieschale und/oder eine stoffliche Veränderung der Batterieschale verstanden, welche dazu eingerichtet ist, die Batterieschale zu versteifen.

Vorzugsweise ist ein äußeres Versteifungsmittel dazu eingerichtet, den Boden der Batterieschale und/oder zumindest eine Seitenwand der Batterieschale zu versteifen.

Vorzugsweise sei bei einem äußeren Versteifungsmittel an eine Profilierung zumindest einer Seitenwand der Batterieschale gedacht, wobei die Profilierung der zumindest einen profilierten Seitenwand der Batterieschale zumindest ein Flächenträgheitsmoment der zumindest einen profilierten Seitenwand der Batterieschale, besonders bevorzugt zwei Flächenträgheitsmomente der zumindest einen profilierten Seitenwand der Batterieschale, gegenüber einer Seitenwand einer Batterieschale ohne Profilierung und mit vergleichbarer Wandstärke sowie vergleichbarer stofflicher Zusammensetzung erhöht.

Bei einer Profilierung sei vorzugsweise an ein I-Profil, ein U-Profil, ein T-Profil, ein Z-Profil, ein L-Profil, ein aus den vorherig genannten Profilen kumulativ zusammengesetztes Profil oder eine abweichende Profilierung gedacht.

Ausdrücklich sei darauf hingewiesen, dass unter einer Profilierung jede geometrische Änderung gegenüber einer ebenen Erstreckung zumindest einer Seitenwand und/oder des Bodens der Batterieschale verstanden werden kann.

Es sei ausdrücklich darauf hingewiesen, dass sich der hier vorgestellte Aspekt eines äußeren Versteifungsmittels nicht auf eine Versteifung einer Seitenwand der Batterieschale beschränkt ist, sondern auch zwei oder mehr Seitenwände der Batterieschale, vorzugsweise alle Seitenwände der Batterieschale, eine äußere Versteifung aufweisen können.

Ausdrücklich sei darauf hingewiesen, dass eine Seitenwand ein Bestandteil eines äußeren Versteifungsmittels darstellen kann.

Vorteilhaft kann hierdurch ein endlosfaserverstärkter Einleger als lokale Versteifungsmaßnahme in einem hierfür besonders vorteilhaften Bereich der Batterieschale angeordnet werden. Das äu-ßere Versteifungsmittel wird in den meisten Anwendungsfällen zur Befestigung der Batterieschale an dem designierten Kraftfahrzeug verwendet, sodass hier alleine deswegen größere Lasten auf die Batterieschale einwirken. Außerdem kann auf diese Weise ein Bereich der Batterieschale versteift werden, welcher bei einem Seitenpfahlaufprall großen von außen einwirkenden Lasten ausgesetzt ist.

Besonders bevorzugt ist der endlosfaserverstärkte Einleger an der Innenseite der Batterieschale angeordnet, insbesondere ist der endlosfaserverstärkte Einleger mit der ersten Fläche des endlosfaserverstärkten Einlegers an der Innenseite der Batterieschale angeordnet.

Vorzugsweise ist ein endlosfaserverstärkter Einleger direkt angrenzend an den Aufnahmeraum der Batterieschale angeordnet.

Vorteilhaft kann hierdurch der geometrische Bauraum zur Erhöhung des von einem dem endlosfaserverstärkten Einlegers ausgehenden Flächenträgheitsmoments maximal ausgenutzt werden. Insbesondere kann ein optimaler Randfaserabstand erreicht werden. Insgesamt lässt sich hierdurch die von dem endlosfaserverstärkten Einleger ausgehende Versteifung der Batterieschale verbessern.

Zweckmäßig ist die Batterieschale mit einem Pressverfahren ausgeformt.

Begrifflich sei hierzu Folgendes erläutert:
Unter einem "Pressverfahren" wird ein Urformverfahren verstanden, bei welchem die Formmasse in einem ersten Schritt in die Kavität eines zugehörigen Presswerkzeugs eingebracht wird, wobei das Presswerkzeug in einem zweiten Schritt geschlossen wird, insbesondere unter Einsatz eines Druckkolbens. Durch das Schlie-ßen des Presswerkzeugs erlangt die Formmasse die von dem Presswerkzeug vorgegebene Form, insbesondere die Form der Artikelkavität des Presswerkzeugs. Vorzugsweise wird das Presswerkzeug temperiert.

Insbesondere kann unter einem Pressverfahren auch ein Direkt-Compoundier-Verfahren verstanden werden, bei dem ein Fasermaterial in einen Extruder eingezogen wird, dort mit dem bereits aufgeschmolzenen Matrixpolymer, insbesondere einem Thermoplast oder einem Duroplast, imprägniert sowie in einen Spritzkolben überführt wird und anschließend als Formmasse in das Presswerkzeug eingebracht wird.

Vorteilhaft kann so erreicht werden, dass ein etabliertes Herstellverfahren für die hier vorgeschlagen Batterieschale eingesetzt werden kann, wodurch Kosten eingespart und das Prozessrisiko des Herstellprozesses minimiert werden können.

Weiterhin kann im Vergleich zu einem Spritzgussverfahren eine geringere Faserschädigung bei der Plastifizierung und der Pressverarbeitung erreicht werden, wodurch höhere mittlere Faserlängen und damit einhergehend bessere mechanische Eigenschaften in der Batterieschale erreichbar sind.

Bevorzugt weist die Batterieschale zumindest eine sich linear erstreckende Einbuchtung auf, vorzugsweise eine sich linear erstreckende Einbuchtung an der Innenseite des Bodens.

Begrifflich sei hierzu Folgendes erläutert:
Unter einer "sich linear erstreckenden Einbuchtung" wird eine Hohlform im Relief der Oberfläche der Batterieschale verstanden. Vorzugsweise weist eine Einbuchtung im orthogonal zur Haupterstreckungsrichtung angeordneten Querschnitt eine konkav und/oder konvex verlaufende Senke in der Oberfläche der Batterieschale auf. Vorzugsweise kann eine Einbuchtung eine Vielzahl von Raumkrümmungen aufweisen.

Im Bereich der Einbuchtung kann die Materialstärke der Formmasse der Batterieschale abnehmen.

Vorzugsweise ist eine sich linear erstreckende Einbuchtung angrenzend an ein inneres und/oder äußeres Versteifungsmittel angeordnet. Vorzugsweise erstreckt sich die Haupterstreckungsrichtung der Einbuchtung orthogonal zur Haupterstreckungsrichtung eines inneren und/oder äußeren Versteifungsmittels.

Vorzugsweise weist die Batterieschale eine Mehrzahl von sich linear erstreckenden Einbuchtungen auf, wobei diese paarweise beidseitig eines inneren Versteifungsmittels angeordnet sein können.

Gemäß einem besonders zweckmäßigen Aspekt weist der Einleger eine Fase auf, bevorzugt zwei Fasen.

Begrifflich sei hierzu Folgendes erläutert:
Unter einer "Fase" wird eine abgeschrägte Fläche an einer ersten Kante des Einlegers verstanden. Eine Fase kann einen Winkel von größer oder gleich 20° aufweisen, bevorzugt einen Winkel von größer oder gleich 30°, weiterhin bevorzugt einen Winkel von größer oder gleich 40° und besonders bevorzugt einen Winkel von größer oder gleich 50°. Eine Fase kann einen Winkel von kleiner oder gleich 70° aufweisen, bevorzugt einen Winkel von kleiner oder gleich 60°, weiterhin bevorzugt einen Winkel von kleiner oder gleich 50° und besonders bevorzugt einen Winkel von kleiner oder gleich 40°.

Bevorzugt weist der Einleger eine Fase an der designiert von der Artikelkavität und/oder von der Oberfläche der Batterieschale abgewandten Kante des Einlegers auf.

Die Fase kann sich über eine Dicke von größer oder gleich 20 % der Dicke des Einlegers erstrecken, bevorzugt über eine Dicke von größer oder gleich 40 % der Dicke des Einlegers, weiterhin bevorzugt über eine Dicke von größer oder gleich 60 % der Dicke des Einlegers und besonders bevorzugt über eine Dicke von größer oder gleich 80 % der Dicke des Einlegers.

Die abgeschrägte Fläche der Fase kann mit einer zweiten Kante zusammenfallen, wobei die zweite Kante benachbart zu der ersten Kante angeordnet ist. Hierdurch kann bewirkt werden, dass der Einleger zumindest einseitig in einer spitzen Kante ausläuft, wobei die Spitze Kante einen Öffnungswinkel von kleiner oder 70° aufweist, bevorzugt einen Öffnungswinkel von kleiner oder 50° und besonders bevorzugt einen Öffnungswinkel von kleiner oder 30°.

Beim Schließen des Werkzeugs überfließt die Formmasse mit einer sich fortbewegenden Fließfront den Einleger, wodurch sich die Position des Einlegers ändern kann oder der Einleger in seiner Struktur beschädigt werden kann.

Die Fase kann zur Interaktion mit einer Fließfront der Formmasse beim Ausformen der Batterieschale eingerichtet sein, insbesondere durch die spezifische Gestaltung des mit der Fließfront zuerst in Kontakt kommenden Endes des Einlegers, insbesondere durch eine Fase an einer Kante des Einlegers. So kann eine von der Fließfront der Formmasse designiert in einem Winkel zu umströmende Kante eine Fase und damit eine abgeschrägte Fläche aufweisen. Hierdurch kann erreicht werden, dass der von dem Einleger auf die Formmasse wirkende Fließwiderstand reduziert werden kann und/oder kleinere Kräfte von der Formmasse auf den Einleger übertragen werden, wodurch eine etwaige strukturelle Schädigung des Einlegers reduziert oder verhindert werden kann. Weiterhin kann hierdurch erreicht werden, dass die von der Formmasse auf den Einleger übertragene Druckkraft eine Komponente erfährt, welche normal zu der abgeschrägten Fläche verläuft. Dies ermöglicht unter anderem, dass der Einleger von der Formmasse gegen die Artikelkavität des Werkzeugs gedrückt werden kann, wodurch eine reproduzierbare Anordnung des Einlegers in der Batterieschale bewirkt werden kann.

Weiterhin bevorzugt kann der Einleger in einer Querrichtung zu seiner Haupterstreckungsrichtung an gegenüberliegenden Enden des Einlegers jeweils eine Fase aufweisen, insbesondere an der jeweils von der Artikelkavität und/oder der Oberfläche der Batterieschale abgewandten Kante des Einlegers. Hierdurch kann unterstützt werden, dass der Einleger an der Innenseite der Batterieschale angeordnet werden kann, insbesondere beim beidseitigen Überpressen des Einlegers mit Formmasse. Weiterhin kann durch die beidseitig an der von der Artikelkavität angeordneten abgeschrägten Flächen durch Interaktion mit der Formmasse erreicht werden, dass die der Artikelkavität zugewandte Kante durch die Formmasse an die Artikelkavität und/oder die designierte Oberfläche der Batterieschale gedrückt werden kann, wodurch eine reproduzierbare Anordnung des gesamten Einlegers erreicht werden kann.

Nach einem zweiten Aspekt, nicht gemäß der beanspruchten Erfindung, ein Werkzeug zum Herstellen einer Batterieschale nach dem ersten Aspekt der Erfindung offenbart wird, insbesondere ein Presswerkzeug, wobei das Werkzeug eine Artikelkavität bildet, wobei das Werkzeug bevorzugt ein Mittel zum Füllen der Artikelkavität mit einer Formmasse aufweist.

Begrifflich sei hierzu Folgendes erläutert:
Unter einem "Werkzeug" wird eine Vorrichtung zum Urformen verstanden, insbesondere zum Urformen einer Batterieschale nach dem ersten Aspekt der Erfindung aus einer schmelzflüssigen Formmasse und zumindest einem endlosfaserverstärkten Einleger.

Vorzugsweise wird unter einem Werkzeug ein Presswerkzeug, insbesondere ein Tauchkantenwerkzeug, verstanden.

Vorzugsweise wird unter einem Werkzeug eine Werkzeugstation verstanden, insbesondere eine Werkzeugstation, welche zusätzlich zu einer Artikelkavität und/oder einem Mittel zum Füllen des Werkzeugs weitere Funktionselemente umfasst, insbesondere ein Manipulatorsystem und/oder eine Aufheizvorrichtung.

Unter einer "Artikelkavität" wird der Hohlraum verstanden, der von einem Werkzeug zum bereichsweisen Ausformen des designiert mit dem Werkzeug herzustellenden Bauteils, insbesondere einer Batterieschale, ausgeformt wird.

Unter einem "Mittel zum Füllen" wird eine dem Werkzeug mittelbar oder unmittelbar zugeordnete Vorrichtung verstanden, welche dazu eingerichtet ist, eine schmelzflüssige Formmasse in das Werkzeug einzubringen. Alternativ kann die Formmasse auch manuell in die geöffnete Artikelkavität eingebracht werden.

Vorzugsweise wird unter einem Mittel zum Füllen eine Vorrichtung verstanden, mit welcher eine schmelzflüssige Formmasse in ein zuvor geöffnetes Werkzeug eingebracht werden kann, insbesondere eingelegt werden kann, insbesondere im Zusammenhang mit einem Presswerkzeug und/oder einer Pressvorrichtung.

Vorzugsweise ist ein Mittel zum Füllen der Artikelkavität mit Formmasse dazu eingerichtet, die Formmasse unmittelbar auf einem zuvor eingelegten endlosfaserverstärkten Einleger abzulegen. Hier wird ein Werkzeug zur Herstellung einer Batterieschale nach dem ersten Aspekt der Erfindung vorgeschlagen.

Gemäß einer besonders bevorzugten Ausführungsform weist das Werkzeug eine lokale Erhebung in der Artikelkavität auf, insbesondere eine Mehrzahl von miteinander korrespondierenden lokalen Erhebungen, welche zum teilflächigen Ablegen des endlosfaserverstärkten Einlegers in der Artikelkavität eingerichtet sind.

Begrifflich sei hierzu Folgendes erläutert:
Unter einer "lokale Erhebung" wird eine lokale Erhöhung im Relief der Oberfläche der Artikelkavität verstanden.

Vorzugsweise ist eine lokale Erhebung eine konkav und/oder konvex verlaufende Erhöhung in der Oberfläche der Artikelkavität, vorzugsweise kann eine lokale Erhebung eine Vielzahl von Raumkrümmungen aufweisen. Gemäß einer vorzugsweisen Ausführungsform entspricht die Geometrie einer lokalen Erhebung einem Segment einer Kugel.

Mit anderen Worten ist eine lokale Erhebung dazu ausgebildet, dass ein endlosfaserverstärkter Einleger nicht vollflächig auf der Artikelkavität abgelegt werden muss, wodurch ein Wärmestrom zwischen der Artikelkavität und dem endlosfaserverstärkten Einleger vermindert werden kann, da der endlosfaserverstärkte Einleger überwiegend beabstandet von der der lokalen Erhebung benachbarten Wand der Artikelkavität gelagert werden kann. Insofern wird hier auch von einem "teilflächiges Ablegen" gesprochen.

"Ablegen" bedeutet in diesem Zusammenhang, dass der endlosfaserverstärkte Einleger zumindest statisch bestimmt von der oder den lokalen Erhebungen gelagert wird.

Unter "miteinander korrespondierenden lokalen Erhebungen" wird eine Mehrzahl von lokalen Erhebungen verstanden, welche gemeinschaftlich dazu eingerichtet sind, dass ein endlosfaserverstärkter Einleger auf ihnen abgelegt werden kann.

Vorzugsweise sei unter miteinander korrespondierenden lokalen Erhebungen an Stege gedacht, welche parallel zueinander angeordnet in der Artikelkavität angeordnet sind und welche vorzugsweise zumindest überwiegend einen horizontalen Verlauf aufweisen.

Unter anderem kann so vorteilhaft verhindert oder vermindert werden, dass ein erwärmter endlosfaserverstärkter Einleger durch den Kontakt zu dem Werkzeug, insbesondere zu dem Werkzeug welches eine geringere Temperatur als der endlosfaserverstärkte Einleger aufweist, zu stark auskühlt. Insbesondere kann so erreicht werden, dass der endlosfaserverstärkte Einleger umformbar ist und/oder eine stoffschlüssige Verbindung mit der Formmasse eingehen kann.

Zweckmäßig weist das Werkzeug ein Positionierungsmittel auf, welches zur Positionierung des endlosfaserverstärkten Einlegers in dem Werkzeug eingerichtet ist.

Begrifflich sei hierzu Folgendes erläutert:
Unter einem "Positionierungsmittel" wird ein Mittel verstanden, welches zur Zentrierung des endlosfaserverstärkten Einlegers in der Artikelkavität und/oder zur Verhinderung oder Verminderung einer ungewollten Rutschbewegung des endlosfaserverstärkten Einlegers in der Artikelkavität eingerichtet ist.

Gemäß einer bevorzugten Ausführungsform wird unter einem Positionierungsmittel ein Endanschlag und/oder ein Randanschlag verstanden, insbesondere eine Mehrzahl von Anschlägen welche korrespondierend an mehreren Seiten des endlosfaserverstärkten Einlegers angeordnet sind.

Vorzugsweise ist ein Positionierungsmittel in Form einer lokalen Erhebung in der Artikelkavität ausgestaltet. Dabei sei unter anderem auch daran gedacht, dass sich eine lokale Erhebung zum Ablegen des endlosfaserverstärkten Einlegers einseitig in ein Positionierungsmittel übergeht, wobei eine Erhebungshöhe des Positionierungsmittel höher ist als eine Erhebungshöhe der korrespondierenden lokalen Erhebung.

Vorteilhaft kann hierdurch eine Verschiebung des endlosfaserverstärkten Einlegers durch ein Ablegen oder Einbringen der Formmasse verhindert oder reduziert werden.

Bevorzugt weist das Werkzeug ein Temperiersystem zur Temperierung des Werkzeugs auf.

Begrifflich sei hierzu Folgendes erläutert:
Unter einem "Temperiersystem" wird ein Gerät verstanden, welches zur Steuerung oder Regelung der Temperatur des Werkzeugs eingerichtet ist, insbesondere durch Kühlen und/oder Wärmen des Werkzeugs.

Vorzugsweise ist ein Temperiersystem dazu eingerichtet die Temperatur des Werkzeugs oberhalb von 80°C zu halten.

Vorteilhaft kann hierdurch die Oberflächenqualität der Batterieschale verbessert werden und/oder die Positionierung des endlosfaserverstärkten Einlegers verbessert werden und/oder die Taktzeit beim Ausformen einer Batterieschale verkürzt werden.

Besonders zweckmäßig weist das Werkzeug ein Vorformwerkzeug auf, wobei das Vorformwerkzeug zum Vorformen des endlosfaserverstärkten Einlegers eingerichtet ist.

Begrifflich sei hierzu Folgendes erläutert:
Unter einem "Vorformwerkzeug" wird ein Werkzeug verstanden, welches zum Vorausformen des endlosfaserverstärkten Einlegers eingerichtet ist. Vorzugsweise ist das Vorformwerkzeug dazu eingerichtet, den endlosfaserverstärkten Einleger vor dem Einlegen in die Artikelkavität oder nach dem Einlegen in die Artikelkavität vorzuformen. Vorzugsweise weist ein Vorformwerkzeug einen oder mehrere Schieber auf, welche weiterhin vorzugsweise aktiv gesteuert werden und/oder eine überwiegend vertikale Bewegung ausführen können.

Hier sei daran gedacht, dass die exakte Ausformung des endlosfaserverstärkten Einlegers und mit ihm der Batterieschale durch den die Artikelkavität bildenden Werkzeugkern erfolgt. Der Werkzeugkern kann dabei derart gestaltet sein, dass der vorumgeformte Einleger partiell mit Pressmasse überströmt wird, insbesondere zur Ausformung einer Rippe.

Vorzugsweise ist das Vorformwerkzeug ein Bestandteil des Werkzeugs, wobei das Vorformwerkzeug zumindest bereichsweise relativ zu zumindest einem Teil des Werkzeugs bewegt werden kann, um ein Vorformen des endlosfaserverstärkten Einlegers zu ermöglichen.

Unter anderem sei daran gedacht, dass das Vorformwerkzeug hydraulisch gelagert ist, insbesondere in einem Teil des Werkzeugs hydraulisch gelagert ist.

Das Vorformwerkzeug kann dazu eingerichtet sein, den endlosfaserverstärkten Einleger nur auf einem Teil seiner Längserstreckung oder alternativ über seine gesamte Längserstreckung vorzuformen. Weiterhin sei an ein Vorformwerkzeug gedacht, welches unmittelbar mit dem endlosfaserverstärkten Einleger wechselwirkt oder alternativ zumindest teilweise mit der Formmasse wechselwirkt, welche ihrerseits den endlosfaserverstärkten Einleger verformt.

Vorteilhaft kann hierdurch die Positionierungsgenauigkeit des endlosfaserverstärkten Einlegers und damit die Reproduzierbarkeit bei der designierten Herstellung der Batterieschale verbessert werden.

Besonders bevorzugt weist das Werkzeug in der Artikelkavität eine lokale Vertiefung auf, wobei die lokale Vertiefung zur Ausformung einer Rippe der Batterieschale eingerichtet ist.

Begrifflich sei hierzu Folgendes erläutert:
Unter einer "lokalen Vertiefung" in der Artikelkavität des Werkzeugs wird eine Hohlform im Relief der Oberfläche der Artikelkavität verstanden, wobei die lokale Vertiefung zur Ausformung einer Rippe der Batterieschale eingerichtet ist.

Vorteilhaft kann so eine Batterieschale aufweisend eine Rippe ausgeformt werden, wobei sich die zuvor bereits erläuterten Vorteile der Batterieschale auf das hier beanspruchte Werkzeug übertragen.

Weiterhin bevorzugt weist das Werkzeug eine Querrippenaussparung auf, wobei die Querrippenaussparung zur Ausformung einer Querrippe der Batterieschale eingerichtet ist.

Begrifflich sei hierzu Folgendes erläutert:
Unter einer "Querrippenaussparung" wird eine Geometrie der Artikelkavität verstanden, welche dazu ausgestaltet ist eine Querrippe in der Batterieschale auszuformen, insbesondere eine Querrippe, welche zumindest teilweise von dem endlosfaserverstärkten Einleger umfasst ist.

Durch die hier vorgestellte Querrippenaussparung kann eine Batterieschale aufweisend eine Querrippe ausgeformt werden, sodass sich die bereits erläuterten Vorteile einer Querrippe auf das hier vorgeschlagene Werkzeug übertragen.

Optional weist das Werkzeug einen Manipulator auf oder ist zur Interaktion mit einem Manipulator eingerichtet, wobei der Manipulator zum Ablegen des endlosfaserverstärkten Einlegers in der Artikelkavität eingerichtet ist.

Begrifflich sei hierzu Folgendes erläutert:
Unter einem "Manipulator" wird ein Gerät verstanden, welches physikalische Interaktionen mit seiner Umgebung ermöglicht, wobei der Manipulator zur Verrichtung von mechanischer Arbeit eingerichtet ist.

Vorzugsweise weist ein Manipulator zumindest eine Achse mit einer zugehörigen Antriebseinheit auf.

Vorteilhaft kann hierdurch erreicht werden, dass ein endlosfaserverstärkter Einleger automatisch, mit einer hohen Genauigkeit und reproduzierbar in der Artikelkavität des Werkzeugs abgelegt werden kann.

Zweckmäßig weist das Werkzeug eine Aufheizvorrichtung auf oder ist zur Interaktion mit einer Aufheizvorrichtung eingerichtet, wobei die Aufheizvorrichtung zum Aufheizen des endlosfaserverstärkten Einlegers eingerichtet ist.

Begrifflich sei hierzu Folgendes erläutert:
Unter einer "Aufheizvorrichtung" wird ein Gerät verstanden, welches zum Aufheizen des endlosfaserverstärkten Einlegers eingerichtet ist, insbesondere zum Aufheizen auf eine Temperatur oberhalb der Schmelztemperatur des Matrixmaterials des endlosfaserverstärkten Einlegers, insbesondere auf eine Temperatur oberhalb von 200°C.

Vorzugsweise wird unter einer Aufheizvorrichtung ein Infrarotstrahler verstanden.

Vorteilhaft kann so erreicht werden, dass der endlosfaserverstärkte Einleger vor und/oder nach dem Einbringen in die Artikelkavität aufgeheizt werden kann, wodurch er besser umgeformt werden kann und/oder eine stoffschlüssige Verbindung mit der Formmasse eingehen kann.

Es sei ausdrücklich darauf hingewiesen, dass der Gegenstand des zweiten Aspekts mit dem Gegenstand des vorstehenden Aspekts der Erfindung vorteilhaft kombinierbar ist, und zwar sowohl einzeln oder in beliebiger Kombination kumulativ.

Nach einem dritten Aspekt löst die Aufgabe ein erfindungsgemäßes Verfahren zum Herstellen einer Batterieschale nach dem ersten Aspekt der Erfindung, wie in Anspruch 14 definiert.

Begrifflich sei hierzu Folgendes erläutert:
Unter dem "Einlegen" des endlosfaserverstärkten Einlegers in die Artikelkavität wird insbesondere das Einlegen und/oder Ablegen und/oder Einbringen des endlosfaserverstärkten Einlegers in die Artikelkavität verstanden.

Hier wird ein Verfahren zur prozessintegrierten Herstellung einer hochbelasteten Batterieschale durch ein zumindest teilweises kombiniertes Umformen und Umpressen eines endlosfaserverstärkten Einlegers mit einer Formmasse vorgeschlagen, wodurch eine effiziente und reproduzierbare Batterieschale beim Urformen direkt mit einem endlosfaserverstärkten Einleger stoffschlüssig und/oder formschlüssig verbunden werden kann. Der endlosfaserverstärkte Einleger kann hierdurch lastpfadgerecht lokal in die Batterieschale integriert werden.

Es versteht sich, dass sich die Vorteile einer Batterieschale nach dem ersten Aspekt der Erfindung auf ein Verfahren zur Herstellung einer Batterieschale nach dem ersten Aspekt der Erfindung erstrecken.

Bevorzugt wird der endlosfaserverstärkte Einleger vor dem Einlegen in die Artikelkavität erwärmt, insbesondere mit einer Aufheizvorrichtung, insbesondere bis zu einer Temperatur oberhalb oder gleich des Schmelzpunktes eines Matrixmaterials des endlosfaserverstärkten Einlegers.

Hierdurch kann vorteilhaft erreicht werden, dass der endlosfaserverstärkte Einleger besser umgeformt werden kann oder überhaupt umgeformt werden kann, insbesondere kann hierdurch verhindert oder vermindert werden, dass Endlosfasern beim vorausformen und/oder ausformen brechen, reißen oder anderen Schaden nehmen.

Weiterhin kann hierdurch eine stoffschlüssige Verbindung zwischen dem Matrixmaterial des endlosfaserverstärkten Einlegers und der Formmasse erreicht werden.

Vorteilhaft kann durch ein Erwärmen des endlosfaserverstärkten Einlegers auch die Oberflächenqualität der an den endlosfaserverstärkten Einleger angrenzenden Oberfläche der Batterieschale verbessert werden.

Es sei ausdrücklich darauf hingewiesen, dass gemäß einer alternativen Ausführungsform auch ein Erwärmen des endlosfaserverstärkten Einlegers in der Artikelkavität des Werkzeugs vorgeschlagen wird, insbesondere mit einem Infrarotstrahler. Weiterhin ist denkbar, dass der endlosfaserverstärkte Einleger sowohl vor dem Einlegen in die Artikelkavität als auch nach dem Einlegen in die Artikelkavität erwärmt wird.

Optional wird der endlosfaserverstärkte Einleger beim Einlegen in die Artikelkavität auf einer lokalen Erhebung der Artikelkavität abgelegt.

Hierdurch kann der Oberflächenkontakt zwischen dem endlosfaserverstärkten Einleger und der Artikelkavität auf ein Minimum reduziert werden, wodurch ein Abkühlen des endlosfaserverstärkten Einlegers verhindert oder vermindert werden kann.

Bevorzugt wird der endlosfaserverstärkte Einleger beim Einlegen in die Artikelkavität korrespondierend zu einem Positionierungsmittel abgelegt.

Vorzugsweise wird der endlosfaserverstärkte Einleger an Randanschlägen angrenzend abgelegt oder innerhalb von beidseitig angeordneten Randanschlägen innerhalb der Artikelkavität abgelegt. Hierdurch kann die Positionierungsgenauigkeit des endlosfaserverstärkten Einlegers innerhalb der Batterieschale verbessert werden, wodurch auch die Reproduzierbarkeit bei der Herstellung der Batterieschale verbessert werden kann.

Optional wird der endlosfaserverstärkte Einleger vor dem Ausformen der Batterieschale mit einem Vorformwerkzeug vorausgeformt.

Durch das Vorausformen des endlosfaserverstärkten Einlegers vor dem Einlegen in die geöffnete Artikelkavität oder nach dem Einlegen in die geöffnete Artikelkavität kann die Positionierungsgenauigkeit des endlosfaserverstärkten Einlegers in der Batterieschale verbessert werden.

Es sei ausdrücklich darauf hingewiesen, dass der Gegenstand des dritten Aspekts mit dem Gegenstand der vorstehenden Aspekte vorteilhaft kombinierbar ist, und zwar sowohl einzeln oder in beliebiger Kombination kumulativ.

Nach einem vierten Aspekt, nicht gemäß der beanspruchten Erfindung, eine Batterieschale, insbesondere eine Batterieschale einer Traktionsbatterie offenbart wird, wobei die Batterieschale mit einem Werkzeug nach dem zweiten Aspekt und/oder mit einem Verfahren nach dem dritten Aspekt hergestellt ist. Es versteht sich, dass sich die Vorteile einer Batterieschale hergestellt mit einem Werkzeug nach dem zweiten Aspekt, wie vorstehend beschrieben, und/oder einer Batterieschale hergestellt mit einem Verfahren nach dem dritten Aspekt, wie vorstehend beschrieben, unmittelbar auf eine Batterieschale hergestellt mit einem Werkzeug nach dem zweiten Aspekt und/oder eine Batterieschale hergestellt mit einem Verfahren nach dem dritten Aspekt erstrecken.

Es sei ausdrücklich darauf hingewiesen, dass der Gegenstand des vierten Aspekts mit dem Gegenstand der vorstehenden Aspekte vorteilhaft kombinierbar ist, und zwar sowohl einzeln oder in beliebiger Kombination kumulativ.

Nach einem fünften Aspekt löst die Aufgabe eine erfindungsgemäße Traktionsbatterie, insbesondere eine Traktionsbatterie für ein Kraftfahrzeug, aufweisend eine Batterieschale nach dem ersten Aspekt der Erfindung.

Begrifflich sei hierzu Folgendes erläutert:
Unter einem "Kraftfahrzeug" wird ein durch einen Motor angetriebenes Fahrzeug verstanden. Vorzugsweise ist ein Kraftfahrzeug nicht an eine Schiene gebunden oder zumindest nicht dauerhaft spurgebunden.

Es versteht sich, dass sich die Vorteile einer Batterieschale nach dem ersten Aspekt der Erfindung, wie vorstehend beschrieben, und/oder einer Batterieschale hergestellt mit einem Verfahren nach dem dritten Aspekt, wie vorstehend beschrieben, unmittelbar auf eine Traktionsbatterie aufweisend eine Batterieschale gemäß dem ersten Aspekt der Erfindung und/oder eine Batterieschale hergestellt mit einem Verfahren nach dem dritten Aspekt erstrecken.

Es sei ausdrücklich darauf hingewiesen, dass der Gegenstand des fünften Aspekts mit den Gegenständen der vorstehenden Aspekte vorteilhaft kombinierbar ist, und zwar sowohl ein-zeln oder in beliebiger Kombination kumulativ.

Nach einem sechsten Aspekt löst die Aufgabe ein erfindungsgemäßes Kraftfahrzeug aufweisend eine Batterieschale nach dem ersten Aspekt der Erfindung.

Es versteht sich, dass sich die Vorteile einer Batterieschale nach dem ersten Aspekt der Erfindung, wie vorstehend beschrieben, und/oder einer Batterieschale hergestellt mit einem

Verfahren nach dem dritten Aspekt, wie vorstehend beschrieben, unmittelbar auf ein Kraftfahrzeug aufweisend eine Batterieschale gemäß dem ersten Aspekt der Erfindung und/oder eine Batterieschale hergestellt mit einem Verfahren nach dem dritten Aspekt erstrecken.

Es sei ausdrücklich darauf hingewiesen, dass der Gegenstand des sechsten Aspekts mit den Gegenständen der vorstehenden Aspekte der Erfindung vorteilhaft kombinierbar ist, und zwar sowohl einzeln oder in beliebiger Kombination kumulativ.

Weitere Vorteile, Einzelheiten und Merkmale der Offenbarung ergeben sich nachfolgend aus den erläuterten Ausführungsbeispielen. Dabei zeigen im Einzelnen:
- Figur 1:: schematisch einen Ausschnitt einer erste Ausführungsform einer Batterieschale in perspektivischer Darstellung, wobei die Batterieschale eine Schnittdarstellung aufweist;
- Figur 2:: schematisch einen Ausschnitt einer zweiten Ausführungsform einer Batterieschale in perspektivischer Darstellung, wobei die Batterieschale eine Schnittdarstellung aufweist;
- Figur 3:: schematisch einen Ausschnitt einer dritten Ausführungsform einer Batterieschale in perspektivischer Darstellung, wobei die Batterieschale eine Schnittdarstellung aufweist; und
- Figur 4:: schematisch einen Ausschnitt eines Werkzeugs in einer perspektivischen Darstellung, wobei das Werkzeug eine Schnittdarstellung aufweist.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

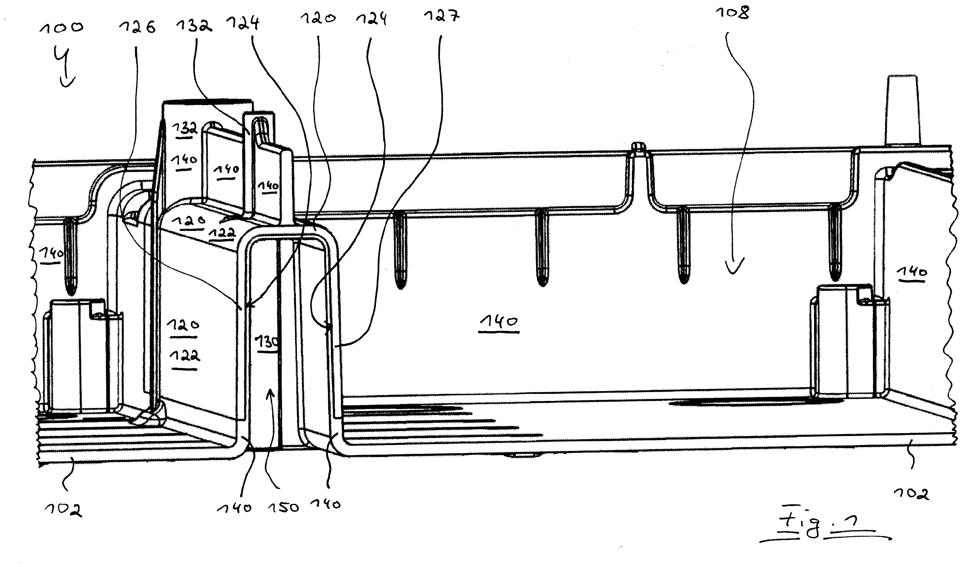

Der Ausschnitt einer Ausführungsform einer Batterieschale 100 in Figur 1 weist eine Batterieschale 100 bestehend aus einem Boden 102 und zumindest einer Seitenwand (nicht dargestellt) auf, wobei die Batterieschale 100 eine Innenseite 108 aufweist, welche zur Aufnahme von Komponenten (nicht abgebildet) einer designierten Traktionsbatterie (nicht abgebildet) eingerichtet ist.

Die Batterieschale 100 ist aus einer Formmasse 140 und einem endlosfaserverstärkten Einleger 120 ausgeformt, wobei der endlosfaserverstärkte Einleger 120 eine erste Fläche 122 aufweist, welche zu mehr oder gleich 50 % nicht von der Formmasse 140 überpresst ist. Weiterhin weist der endlosfaserverstärkte Einleger 120 eine gegenüber der ersten Fläche 122 angeordnete zweite Fläche 124 auf, welche zu mehr oder gleich 95 % von der Formmasse 140 überpresst ist.

Vorliegend besteht der endlosfaserverstärkte Einleger 120 aus einem Organosheet, wobei der endlosfaserverstärkte Einleger an der Innenseite 108 der Batterieschale 100 angeordnet ist, insbesondere mit der ersten Fläche 122 des endlosfaserverstärkten Einlegers 120 an der Innenseite 108 der Batterieschale 100 angeordnet ist.

Der endlosfaserverstärkte Einleger 120 ist in einem inneren Versteifungsmittel 150 der Batterieschale 100 angeordnet und weist keine sich flach erstreckende Geometrie auf, sondern eine dreidimensionale Geometrie. Insbesondere ist der ursprünglich vor dem Ausformen der Batterieschale 100 eine flache Geometrie aufweisende endlosfaserverstärkter Einleger 120 derart ausgeformt, dass er nach dem Ausformen keine ebene Geometrie mehr aufweist. Mit anderen Worten ragt der endlosfaserverstärkte Einleger 120 aus einer flachen Ebene heraus. Mit anderen Worten ist der endlosfaserverstärkte Einleger 120 aus einer Ebene heraus ausgeformt.

Der endlosfaserverstärkte Einleger 120 weist in einem Querschnitt zu seiner Haupterstreckungsrichtung einen ersten Schenkel 126 und einen zweiten Schenkel 127 auf, wobei der erste Schenkel 126 und der zweite Schenkel 127 miteinander verbunden sind, insbesondere unmittelbar miteinander verbunden sind.

Der endlosfaserverstärkte Einleger 120 umfasst mit seiner zweiten Fläche 124 eine Querrippe 130 zumindest teilweise. Die Querrippe 130 ist zur Versteifung des inneren Versteifungsmittels 150 und damit zur Versteifung der Batterieschale 100 eingerichtet.

Auf der Innenseite 108 der Batterieschale 100 ist zwischen dem ersten Schenkel 126 und dem zweiten Schenkel 127 des endlosfaserverstärkten Einlegers 120 ein Funktionselement 132 angeordnet, welches ebenfalls aus der Formmasse 140 ausgeformt ist.

Der Einleger 120 kann eine Fase aufweisen. Vorzugsweise weist der Einleger 120 eine Fase auf, die zur Interaktion mit einer Fließfront der Formmasse 140 beim Ausformen der Batterieschale 100 eingerichtet ist, wobei insbesondere ein Fließdruck der Formmasse 140 beim Ausformen der Batterieschale 100 mit der Fase vorteilhaft wechselwirkt. Hierdurch kann erreicht werden, dass der Einleger unter Ausnutzung des Fließdrucks der Formmasse 140 reproduzierbar gegen eine Artikelkavität (nicht dargestellt) eines Werkzeugs (nicht dargestellt) gedrückt werden kann, wodurch insgesamt eine reproduzierbare Anordnung des Einlegers 120 in der Batterieschale 100 unterstützt werden kann und/oder eine Reproduzierbarkeit einer Anordnung des Einlegers 120 in der Batterieschale 100 verbessert werden kann.

Weiterhin bevorzugt weist der Einleger 120 in einer Querrichtung zu seiner Haupterstreckungsrichtung an gegenüberliegenden Enden des Einlegers 120 jeweils eine Fase auf. Hierdurch kann unterstützt werden, dass der Einleger 120 an der Innenseite 108 der Batterieschale 100 angeordnet ist.

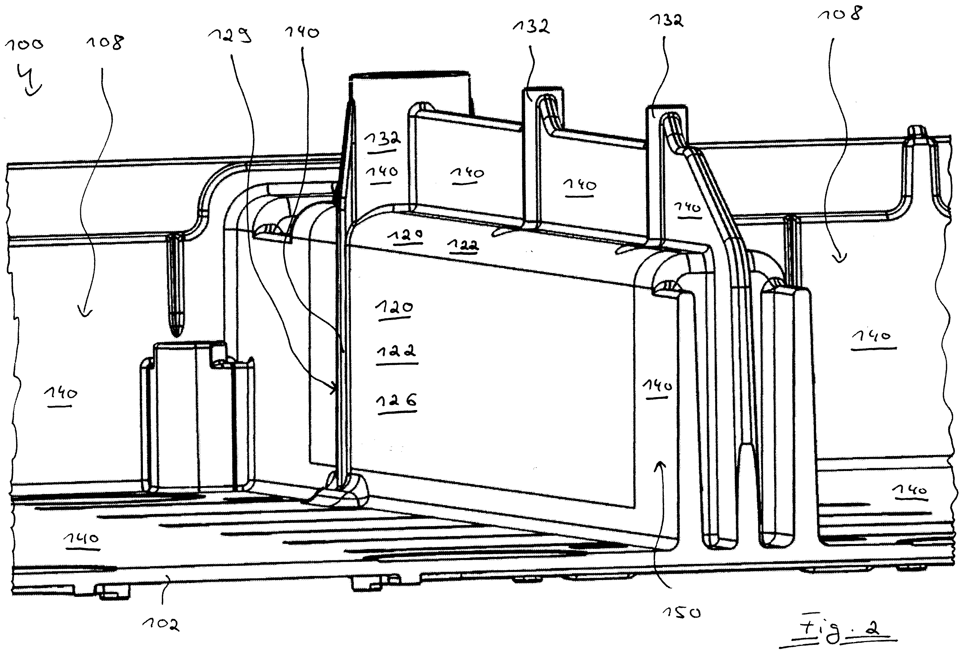

Der Ausschnitt einer Ausführungsform einer Batterieschale 100 in Figur 2 weist eine Batterieschale 100 mit einem Boden 102 auf und ermöglicht eine seitliche Ansicht auf einen in einem inneren Versteifungsmittel 150 angeordneten endlosfaserverstärkten Einleger 120. Insbesondere ermöglicht die perspektivische Ansicht einen besseren Blick auf die erste Fläche 122 des ersten Schenkels 126 des endlosfaserverstärkten Einlegers 120.

Auf der Oberseite des endlosfaserverstärkten Einlegers 120 sind zumindest drei Funktionselemente 132 angeordnet, welche ebenfalls aus der Formmasse 140 ausgeformt sind und von welchen zumindest zwei Verbindungselemente 132 darstellen, welche zur Verbindung der Batterieschale 100 mit weiteren Komponenten (nicht abgebildet) einer designierten Traktionsbatterie (nicht abgebildet) eingerichtet sind.

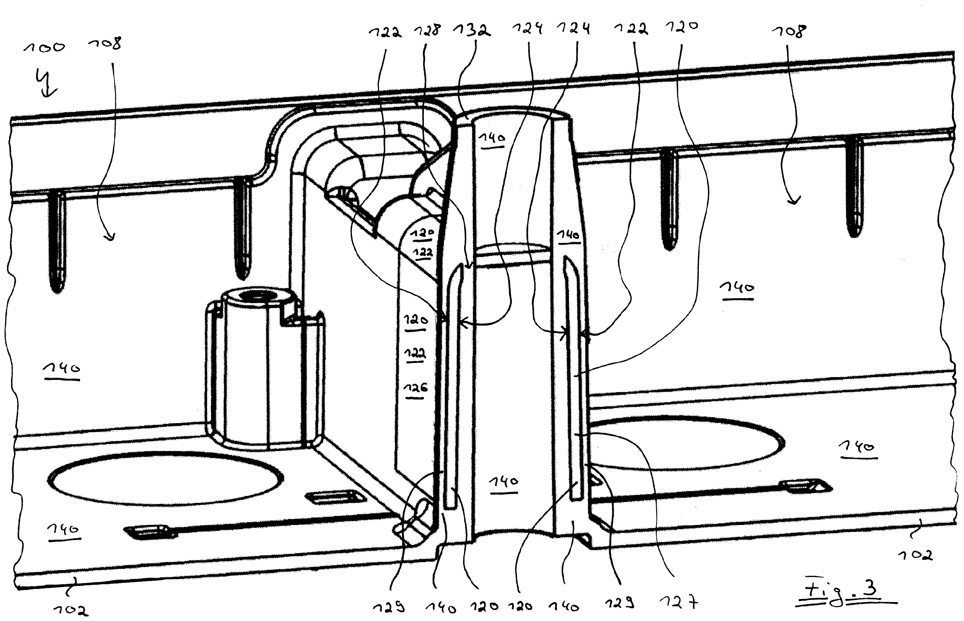

Der Ausschnitt einer Ausführungsform einer Batterieschale 100 in Figur 3 weist eine Batterieschale 100 mit einem Boden 102 und einem inneren Versteifungsmittel 150 auf, welche in einer durch ein Funktionselement 132 geschnittenen Darstellung gezeigt ist. Weiterhin verläuft die Schnittebene (nicht bezeichnet) durch eine Rippe 129 des inneren Versteifungsmittels 150.

Zwischen dem ersten Schenkel 126 und dem zweiten Schenkel 127 des endlosfaserverstärkten Einlegers 120 weist dieser eine Aussparung 128 auf. Unter anderem ermöglicht die Aussparung 128 in dem endlosfaserverstärkten Einleger 120, dass dieser beim Ausformen (nicht dargestellt) der Batterieschale 100 auf eine vorteilhafte Weise von der Formmasse 140 durchströmt werden kann. So kann Formmasse 140 den ebenfalls aus Formmasse 140 ausgeformten Bereich des Funktionselements 132 während der Ausformung (nicht dargestellt) der Batterieschale 100 mittels einem Fließpressverfahren erreichen und ausformen.

Die beidseitig des endlosfaserverstärkten Einlegers 120 ausgeformte Rippe 129 kann die Steifigkeit des inneren Versteifungselements 150 erhöhen. Währende dem Ausformen der Batterieschale 100 kann Formmasse 140 in den Bereich des Funktionselements 132 einströmen und dazu beitragen das Funktionselement 132 auszuformen.

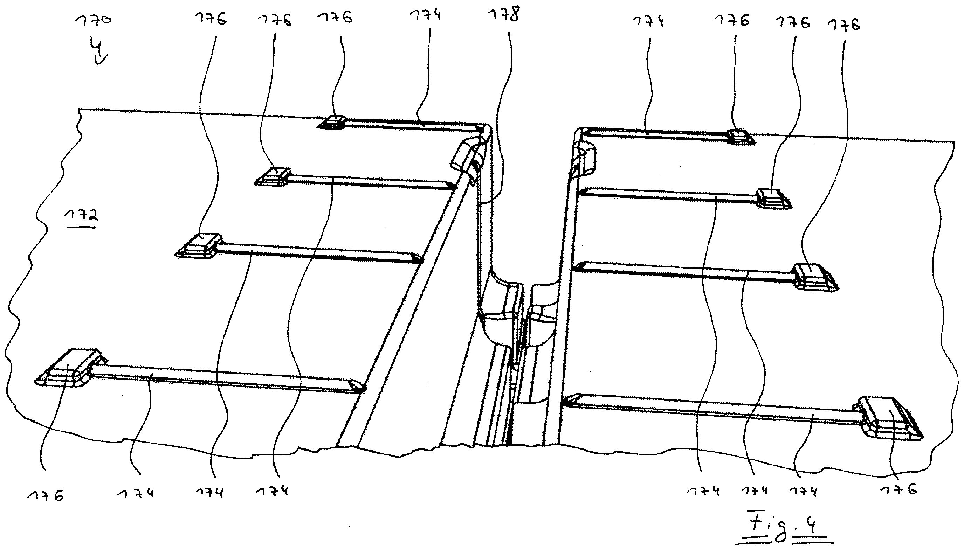

Der Ausschnitt eines Werkzeugs 170 in Figur 4 zeigt eine Ansicht in ein geöffnetes Werkzeug 170, welches mit seiner Artikelkavität 172 zum Ausformen einer Batterieschale (nicht abgebildet) eingerichtet ist. Das Werkzeug 170 ist auf der hinteren Seite geschnitten dargestellt.

Das Werkzeug 170 weist eine Mehrzahl von miteinander korrespondierenden lokalen Erhebungen 174 auf, welche zum teilflächigen Ablegen eines endlosfaserverstärkten Einlegers (nicht abgebildet) in der Artikelkavität 172 eingerichtet sind. Dabei kann ein endlosfaserverstärkter Einleger (nicht abgebildet), welcher vor dem Ausformen der Batterieschale (nicht abgebildet) eine ebene Geometrie aufweisen kann, auf den lokalen Erhebungen 174 abgelegt werden. Da der endlosfaserverstärkte Einleger (nicht abgebildet) eine inhärente Steifigkeit aufweist, berührt er das Werkzeug 170 nach dem Ablegen zumindest überwiegend nur an den lokalen Erhebungen 174, wodurch ein Auskühlen des endlosfaserverstärkten Einlegers (nicht abgebildet) reduziert werden kann.

Zur reproduzierbaren Positionierung des endlosfaserverstärkten Einlegers (nicht abgebildet) in dem Werkzeug 170, weist dieses zusätzlich Positionierungsmittel 176 auf, welche korrespondierend zu den lokalen Erhebungen 174 angeordnet sind.

Weiterhin weist das Werkzeug 170 in der Artikelkavität 172 eine lokale Vertiefung 178 auf, wobei die lokale Vertiefung 178 zur Ausformung einer Rippe (nicht abgebildet) der Batterieschale (nicht abgebildet) eingerichtet ist.

### Bezugszeichenliste

- 100: Batterieschale
- 102: Boden
- 108: Innenseite
- 120: endlosfaserverstärkter Einleger
- 122: erste Fläche
- 124: zweite Fläche
- 126: erster Schenkel
- 127: zweiter Schenkel
- 128: Aussparung
- 129: Rippe
- 130: Querrippe
- 132: Funktionselement
- 140: Formmasse
- 150: inneres Versteifungsmittel
- 170: Werkzeug
- 172: Artikelkavität
- 174: lokale Erhebung
- 176: Positionierungsmittel
- 178: lokale Vertiefung

## Patentansprüche

1. Batterieschale (100), insbesondere eine Batterieschale (100) einer Traktionsbatterie, wobei die Batterieschale (100) einen Boden (102) und zumindest vier Seitenwände aufweist, wobei die Batterieschale (100) eine Innenseite (108) und eine Außenseite aufweist,
wobei die Batterieschale (100) aus einer Formmasse (140) aus Kunststoff und einem endlosfaserverstärkten Einleger (120) ausgeformt ist,
wobei der endlosfaserverstärkte Einleger (120) eine erste Fläche (122) aufweist, welche zu mehr oder gleich 50 % nicht von der Formmasse (140) überpresst ist, bevorzugt zu mehr oder gleich 60 % und besonders bevorzugt zu mehr oder gleich 75 %,
wobei der endlosfaserverstärkte Einleger (120) eine gegenüber der ersten Fläche (122) angeordnete zweite Fläche (124) aufweist, welche zu mehr oder gleich 95 % von der Formmasse (140) überpresst ist, bevorzugt zu mehr oder gleich 97 % und besonders bevorzugt zu mehr oder gleich 99 %,
**dadurch gekennzeichnet, dass**
die Formmasse (140) mit einem Fasermaterial versetzt ist.

2. Batterieschale (100) nach Anspruch 1, **dadurch gekennzeichnet, dass** der endlosfaserverstärkten Einleger (120) ein Organosheet und/oder ein Tape-Gelege aufweist.

3. Batterieschale (100) nach einem der vorstehenden Ansprüche, **dadurch gekennzeichnet, dass** der endlosfaserverstärkte Einleger (120) aus einer Ebene heraus ausgeformt ist.

4. Batterieschale (100) nach einem der vorstehenden Ansprüche, **dadurch gekennzeichnet, dass** der endlosfaserverstärkte Einleger (120) in einem Querschnitt zu seiner Haupterstreckungsrichtung zumindest einen ersten Schenkel (126) und einen zweiten Schenkel (127) aufweist, wobei der erste Schenkel (126) und der zweite Schenkel (127) miteinander verbunden sind, wobei der erste Schenkel (126) und der zweite Schenkel (127) einen Winkel von kleiner oder gleich 100° zueinander aufweisen, bevorzugt einen Winkel von kleiner oder gleich 50° und besonders bevorzugt einen Winkel von kleiner oder gleich 30°.

5. Batterieschale (100) nach Anspruch 4, **dadurch gekennzeichnet, dass** der erste Schenkel (126) und der zweite Schenkel (127) einen Winkel von größer oder gleich 5° zueinander aufweisen, bevorzugt einen Winkel von größer oder gleich 10° und besonders bevorzugt einen Winkel von größer oder gleich 15°.

6. Batterieschale (100) nach einem der vorstehenden Ansprüche, **dadurch gekennzeichnet, dass** der endlosfaserverstärkte Einleger (120) zumindest eine Aussparung (128) aufweist.

7. Batterieschale (100) nach einem der vorstehenden Ansprüche, **dadurch gekennzeichnet, dass** der endlosfaserverstärkte Einleger (120) unmittelbar angrenzend an seine erste Fläche (122) eine Rippe (129) aufweist.

8. Batterieschale (100) nach einem der vorstehenden Ansprüche, **dadurch gekennzeichnet, dass** der endlosfaserverstärkte Einleger (120) mit seiner zweiten Fläche (124) eine Querrippe (130) zumindest teilweise umfasst.

9. Batterieschale (100) nach einem der vorstehenden Ansprüche, **dadurch gekennzeichnet, dass** der endlosfaserverstärkte Einleger (120) in einem inneren Versteifungsmittel (150) der Batterieschale (100) angeordnet ist.

10. Batterieschale (100) nach einem der vorstehenden Ansprüche, **dadurch gekennzeichnet, dass** der endlosfaserverstärkte Einleger an der Innenseite (108) der Batterieschale (100) angeordnet ist, insbesondere mit der ersten Fläche (122) des endlosfaserverstärkten Einlegers (120) an der Innenseite (108) der Batterieschale (100) angeordnet ist.

11. Batterieschale (100) nach einem der vorstehenden Ansprüche, **dadurch gekennzeichnet, dass** die Batterieschale (100) mit einem Pressverfahren ausgeformt ist.

12. Batterieschale (100) nach einem der vorstehenden Ansprüche, **dadurch gekennzeichnet, dass** die Batterieschale (100) zumindest eine sich linear erstreckende Einbuchtung aufweist, vorzugsweise eine sich linear erstreckende Einbuchtung an der Innenseite (108) des Bodens (102) aufweist.

13. Batterieschale (100) nach einem der vorstehenden Ansprüche, **dadurch gekennzeichnet, dass** der Einleger (120) eine Fase aufweist, bevorzugt zwei Fasen.

14. Verfahren zum Herstellen einer Batterieschale (100) nach einem der Ansprüche 1 bis 13 wobei das Verfahren zum Herstellen der Batterieschale (100) die nachfolgenden Schritte umfasst:
a) Einlegen des endlosfaserverstärkten Einlegers (120) in die geöffnete Artikelkavität (172);
b) Einbringen der Formmasse (140) in die Artikelkavität (172);
c) Ausformen der Batterieschale (100);
d) Entformen der Batterieschale (100).

15. Verfahren nach Anspruch 14, **dadurch gekennzeichnet, dass** der endlosfaserverstärkte Einleger (120) vor dem Einlegen in die Artikelkavität (172) erwärmt wird, insbesondere mit einer Aufheizvorrichtung, insbesondere bis zu einer Temperatur oberhalb oder gleich des Schmelzpunktes eines Matrixmaterials des endlosfaserverstärkten Einlegers (120).

16. Verfahren nach einem der Ansprüche 14 oder 15, **dadurch gekennzeichnet, dass** der endlosfaserverstärkte Einleger (120) beim Einlegen in die Artikelkavität (172) auf einer lokalen Erhebung (174) der Artikelkavität (172) abgelegt wird.

17. Verfahren nach einem der Ansprüche 14 bis 16, **dadurch gekennzeichnet, dass** der endlosfaserverstärkte Einleger (120) beim Einlegen in die Artikelkavität (172) korrespondierend zu einem Positionierungsmittel (176) abgelegt wird.

18. Verfahren nach einem der Ansprüche 14 bis 17, **dadurch gekennzeichnet, dass** der endlosfaserverstärkte Einleger (120) vor dem Ausformen der Batterieschale (100) mit einem Vorformwerkzeug vorausgeformt wird.

19. Traktionsbatterie, insbesondere eine Traktionsbatterie für ein Kraftfahrzeug, aufweisend eine Batterieschale (100) nach einem der Ansprüche 1 bis 13.

20. Kraftfahrzeug aufweisend eine Batterieschale (100) nach einem der Ansprüche 1 bis 13.

## Claims

1. A battery shell (100), in particular a battery shell (100) of a traction battery, wherein the battery shell (100) has a base (102) and at least four side walls, wherein the battery shell (100) has an inner side (108) and an outer side,
wherein the battery shell (100) is molded from a molding compound (140) made of plastic and from a continuous-fiber-reinforced insert (120),
wherein the continuous-fiber-reinforced insert (120) has a first surface (122) of which more than or equal to 50%, preferably more than or equal to 60%, and particularly preferably more than or equal to 75% is not overpressed by the molding compound (140),
wherein the continuous-fiber-reinforced insert (120) has a second surface (124), which is arranged opposite the first surface (122) and of which more than 95%, preferably more than or equal to 97%, and particularly preferably more than or equal to 99%, is overpressed by the molding compound (140),
**characterized in that**
the molding compound (140) is mixed with a fiber material.

2. The battery shell (100) according to claim 1, **characterized in that** the continuous-fiber-reinforced insert (120) comprises an organosheet and/or a tape fabric.

3. The battery shell (100) according to any one of the preceding claims, **characterized in that** the continuous-fiber-reinforced insert (120) is shaped from a single plane.

4. The battery shell (100) according to any one of the preceding claims, **characterized in that** the continuous-fiber-reinforced insert (120) has at least a first leg (126) and a second leg (127) in a cross-section to its main direction of extension, wherein the first leg (126) and the second leg (127) are connected to one another, wherein the first leg (126) and the second leg (127) have an angle of less than or equal to 100° to one another, preferably an angle of less than or equal to 50° and particularly preferably an angle of less than or equal to 30°.

5. The battery shell (100) according to claim 4, **characterized in that** the first leg (126) and the second leg (127) have an angle of greater than or equal to 5° to one another, preferably an angle of greater than or equal to 10°, and particularly preferably an angle of greater than or equal to 15°.

6. The battery shell (100) according to any one of the preceding claims, **characterized in that** the continuous-fiber-reinforced insert (120) has at least one recess (128).

7. The battery shell (100) according to any one of the preceding claims, **characterized in that** the continuous-fiber-reinforced insert (120) has a rib (129) immediately adjacent to its first surface (122).

8. The battery shell (100) according to any one of the preceding claims, **characterized in that** the continuous-fiber-reinforced insert (120) with its second surface (124) at least partially comprises a transverse rib (130).

9. The battery shell (100) according to any one of the preceding claims, **characterized in that** the continuous-fiber-reinforced insert (120) is arranged in an inner stiffening means (150) of the battery shell (100).

10. The battery shell (100) according to any one of the preceding claims, **characterized in that** the continuous-fiber-reinforced insert is arranged on the inner side (108) of the battery shell (100), in particular with the first surface (122) of the continuous-fiber-reinforced insert (120) arranged on the inner side (108) of the battery shell (100).

11. The battery shell (100) according to any one of the preceding claims, **characterized in that** the battery shell (100) is molded using a compression-molding process.

12. The battery shell (100) according to any one of the preceding claims, **characterized in that** the battery shell (100) has at least one linearly extending indentation, preferably a linearly extending indentation on the inner side (108) of the base (102).

13. The battery shell (100) according to any one of the preceding claims, **characterized in that** the insert (120) has a chamfer, preferably two chamfers.

14. A method for producing a battery shell (100) according to any one of claims 1 to 13, wherein the method for producing the battery shell (100) comprises the following steps:
a) inserting the continuous-fiber-reinforced insert (120) into the opened article cavity (172);
b) introducing the molding compound (140) into the article cavity (172);
c) forming the battery shell (100);
d) demolding the battery shell (100).

15. The method according to claim 14, **characterized in that** the continuous-fiber-reinforced insert (120) is heated before being inserted into the article cavity (172), in particular with a heating device, in particular to a temperature above or equal to the melting point of a matrix material of the continuous-fiber-reinforced insert (120).

16. The method according to any one of claims 14 or 15, **characterized in that** the continuous-fiber-reinforced insert (120) is deposited on a local elevation (174) of the article cavity (172) when it is inserted into the article cavity (172).

17. The method according to any one of claims 14 to 16, **characterized in that** the continuous-fiber-reinforced insert (120) is deposited corresponding to a positioning means (176) when inserted into the article cavity (172).

18. The method according to any one of claims 14 to 17, **characterized in that** the continuous-fiber-reinforced insert (120) is preshaped with a preforming tool before the battery shell (100) is molded.

19. A traction battery, in particular a traction battery for a motor vehicle, comprising a battery shell (100) according to any of the claims 1 to 13.

20. A motor vehicle comprising a battery shell (100) according to any of claims 1 to 13.

## Revendications

1. Coque de batterie (100), en particulier coque de batterie (100) d'une batterie de traction, dans laquelle la coque de batterie (100) présente un fond (102) et au moins quatre parois latérales, dans laquelle la coque de batterie (100) présente un côté intérieur (108) et un côté extérieur,
dans laquelle la coque de batterie (100) est formée à partir d'une matière à mouler (140) en matière plastique et d'un insert renforcé par des fibres (120),
dans laquelle l'insert renforcé par des fibres (120) présente une première surface (122) qui n'est pas surmoulée de manière supérieure ou égale à 50 %, de préférence de manière supérieure ou égale à 60 % et de manière particulièrement préférée de manière supérieure ou égale à 75 %, par la matière à mouler (140),
dans laquelle l'insert renforcé par des fibres (120) présente une seconde surface (124) disposée en face de la première surface (122), laquelle seconde surface est surmoulée de manière supérieure ou égale à 95 %, de préférence de manière supérieure ou égale à 97 % et de manière particulièrement préférée de manière supérieure ou égale à 99 %, par la matière à mouler (140),
**caractérisée en ce que**
la matière à mouler (140) est mélangée avec un matériau fibreux.

2. Coque de batterie (100) selon la revendication 1, **caractérisée en ce que** l'insert renforcé par des fibres (120) présente une feuille de type organosheet et/ou une bande de ruban.

3. Coque de batterie (100) selon l'une des revendications précédentes, **caractérisée en ce que** l'insert renforcé par des fibres (120) est formé à partir d'un plan.

4. Coque de batterie (100) selon l'une des revendications précédentes, **caractérisée en ce que** l'insert renforcé par des fibres (120) présente, dans une section transversale par rapport à sa direction d'extension principale, au moins une première branche (126) et une seconde branche (127), dans laquelle la première branche (126) et la seconde branche (127) sont reliées l'une à l'autre, dans laquelle la première branche (126) et la seconde branche (127) présentent un angle inférieur ou égal à 100°, de préférence un angle inférieur ou égal à 50° et de manière particulièrement préférée un angle inférieur ou égal à 30° l'une par rapport à l'autre.

5. Coque de batterie (100) selon la revendication 4, **caractérisée en ce que** la première branche (126) et la seconde branche (127) présentent un angle supérieur ou égal à 5°, de préférence un angle supérieur ou égal à 10° et plus préférentiellement un angle supérieur ou égal à 15° l'une par rapport à l'autre.

6. Coque de batterie (100) selon l'une des revendications précédentes, **caractérisée en ce que** l'insert renforcé par des fibres (120) continues présente au moins un évidement (128).

7. Coque de batterie (100) selon l'une des revendications précédentes, **caractérisée en ce que** l'insert renforcé par des fibres (120) présente une nervure (129) immédiatement adjacente à sa première surface (122).

8. Coque de batterie (100) selon l'une des revendications précédentes, **caractérisée en ce que** l'insert renforcé par des fibres (120) comprend au moins partiellement une nervure transversale (130) avec sa seconde surface (124).

9. Coque de batterie (100) selon l'une des revendications précédentes, **caractérisée en ce que** l'insert renforcé par des fibres (120) est disposé dans un moyen de renforcement interne (150) de la coque de batterie (100).

10. Coque de batterie (100) selon l'une des revendications précédentes, **caractérisée en ce que** l'insert renforcé par des fibres continues est disposé sur le côté intérieur (108) de la coque de batterie (100), en particulier avec la première surface (122) de l'insert renforcé par des fibres (120) disposée sur le côté intérieur (108) de la coque de batterie (100).

11. Coque de batterie (100) selon l'une des revendications précédentes, **caractérisée en ce que** la coque de batterie (100) est formée par un procédé de moulage.

12. Coque de batterie (100) selon l'une des revendications précédentes, **caractérisée en ce que** la coque de batterie (100) présente au moins un renfoncement s'étendant linéairement, de préférence un renfoncement s'étendant linéairement sur le côté intérieur (108) du fond (102).

13. Coque de batterie (100) selon l'une des revendications précédentes, **caractérisée en ce que** l'insert (120) présente un chanfrein, de préférence deux chanfreins.

14. Procédé de fabrication d'une coque de batterie (100) selon l'une des revendications 1 à 13, dans lequel le procédé de fabrication de la coque de batterie (100) comprend les étapes suivantes :
a) insertion de l'insert renforcé par des fibres (120) dans la cavité pour article (172) ouverte ;
b) introduction de la matière à mouler (140) dans la cavité pour article (172) ;
c) moulage de la coque de batterie (100) ;
d) démoulage de la coque de batterie (100).

15. Procédé selon la revendication 14, **caractérisé en ce que** l'insert renforcé par des fibres (120) est chauffé avant l'insertion dans la cavité pour article (172), en particulier par un dispositif de chauffage, en particulier jusqu'à une température supérieure ou égale au point de fusion d'un matériau à matrice de l'insert renforcé par des fibres (120).

16. Procédé selon l'une des revendications 14 ou 15, **caractérisé en ce que** l'insert renforcé par des fibres (120) est déposé sur une élévation locale (174) de la cavité pour article (172) lors de l'insertion dans la cavité pour article (172).

17. Procédé selon l'une des revendications 14 à 16, **caractérisé en ce que** l'insert renforcé par des fibres (120) est déposé en correspondance avec un moyen de positionnement (176) lors de l'insertion dans la cavité pour article (172).

18. Procédé selon l'une des revendications 14 à 17, **caractérisé en ce que** l'insert renforcé par des fibres (120) est prémoulé par un outil de prémoulage avant le moulage de la coque de batterie (100).

19. Batterie de traction, en particulier une batterie de traction pour un véhicule automobile, présentant une coque de batterie (100) selon l'une des revendications 1 à 13.

20. Véhicule automobile présentant une coque de batterie (100) selon l'une des revendications 1 à 13.
